# EUROPEAN PATENT SPECIFICATION

(11) **EP 2 818 939 B1**
(45) Date of publication and mention of the grant of the patent: **12.12.2018**
(21) Application number: 14173317.0
(22) Date of filing: 20.06.2014
(51) Int. Cl.: G03G 15/16, B29K 507/04, B29L 29/00, B29K 505/00, B29K 81/00, B29K 105/16, B29C 47/00

(54) **BELT ASSEMBLY, IMAGE-FORMING APPARATUS, AND METHOD FOR MANUFACTURING THE BELT ASSEMBLY**
BANDANORDNUNG, BILDERZEUGUNGSVORRICHTUNG UND VERFAHREN ZUR HERSTELLUNG DER BANDANORDNUNG
ENSEMBLE DE COURROIE, APPAREIL DE FORMATION D'IMAGE ET PROCÉDÉ DE FABRICATION DE L'ENSEMBLE DE COURROIE

(30) Priority: 26.06.2013 JP 2013133965
(43) Date of publication of application: 31.12.2014
(73) Proprietor: Ricoh Company, Ltd., Tokyo 143-8555 (JP)
(72) Inventor: Tanaka, Takashi, Tokyo 143-8555 (JP); Kamoi, Sumio, Tokyo 143-8555 (JP); Hayashi, Yumiko, Tokyo 143-8555 (JP)
(74) Representative: J A Kemp

(56) References cited:
- JP-A- 2005 292 208
- JP-A- 2011 186 035
- US-A1- 2010 266 785
- US-A1- 2012 094 013

## Description

### BACKGROUND

### Field of the Invention

The present invention relates to a belt assembly provided in an image-forming apparatus such as a printer, facsimile, or copier, an image-forming apparatus including the belt assembly, and a method for manufacturing the belt assembly.

An image-forming apparatus including an intermediate transfer belt of a belt assembly as an intermediate-transcriptional body is useful as a color image-forming apparatus or a multicolor image-forming apparatus which outputs a printed color image by laminating and transferring a plurality of multicolor images including color-image information or multicolor-image information in order.

As such a kind of image-forming apparatus, many image-forming apparatuses including an intermediate-transfer belt, which is composed by resin including polyimide resin, polyamide-imide resin and so on, have been provided so far.

JP3411091B discloses that a belt assembly which is provided in the intermediate transfer belt is manufactured by casting polyimide resin on an outer surface of a cylindrical-metal mold, heating the metal mold, and demolding the polyimide resin after the imidization of the polyimide resin. JP5064615B discloses that a belt assembly which is provided in an intermediate-transfer belt is manufactured by applying polyimide resin on an inner surface of a cylindrical-metal mold, rotating and heating the metal mold, and demolding the polyimide resin after the imidization of the polyimide resin.

However, in the case in which the belt assembly provided in the intermediate-transfer belt is composed by polyimide resin as described above, a cost in relation to materials becomes high or a manufacturing cost becomes high because the imidizing process takes time. Also, a new metal mold is required each time the standard size of the intermediate transfer belt is changed. Thus, the initial cost becomes high because many metal molds are required.

The cost of the intermediate-transfer belt is relatively high in relation to members configuring an image-forming apparatus, so cost reduction is highly needed. In order to achieve such a cost reduction in manufacturing the intermediate-transfer belt, for example, the intermediate-transfer belt can be manufactured inexpensively by extrusion molding using thermoplastics resin, as shown in JP2011-186035A.

However, the conventional intermediate-transfer belt which is formed by the extrusion molding of the thermoplastics resin cannot satisfy all the conditions such as: mechanical properties, electric properties, flame resistivity, surface smoothness which are required in the intermediate-transfer belt; and resistance controllability and molding stability which are required during the extrusion molding. As a result, the conventional intermediate-transfer belt cannot satisfy the needs such as preventing a belt rupture during belt-running, solving an image-defect problem such as a white spot, maintaining reproducibility in manufacturing through the easy control of properties, achieving cost reduction in manufacturing, and guaranteeing high level safety by flame resistivity.

In addition, a transfer-carrying belt which carries recording media on which a toner image on a photoreceptor is transferred has a similar problem.

### SUMMARY

In light of the above, an object of the present invention aims to provide: a belt assembly having sufficient mechanical properties, electric properties, flame resistivity, and surface smoothness which are required in a transfer belt, at the same time as maintaining resistance controllability and molding stability during extrusion molding; an image-forming apparatus including the belt assembly; and a manufacturing method for manufacturing the belt assembly.

In order to accomplish the above-described object, the present invention provides a belt assembly, image-forming apparatus and a method for manufacturing a belt assembly as defined in the appended claims

### BRIEF DESCRIPTION OF THE DRAWINGS

The accompanying drawings are included to provide further understanding of the invention, and are incorporated in and constitute a part of this specification. The drawings illustrate embodiments of the invention and, together with the specification, serve to explain the principle of the invention
FIG. 1 schematically illustrates a configuration of an image-forming apparatus according to Embodiments of the present invention.
FIG. 2 is a graph showing an elastic modulus of a conductive-resin belt composed of a polymer alloy including PPS and PC.
FIG. 3 is a graph showing an MIT value of the conductive-resin belt composed of the polymer alloy of PPS and PC.
FIG. 4 is a graph showing an elastic modulus of a conductive-resin belt composed of a polymer alloy including PEEK and PES.
FIG. 5 is a graph showing an MIT value of the conductive-resin belt composed of the polymer alloy including PEEK and PES.
FIG. 6 is a schematic view of a belt-manufacturing device in which a mandrel is directly connected to a lower portion of a dice.
FIG. 7 schematically illustrates a configuration of an image-forming apparatus including a conductive-resin belt as a transfer-carrying belt.

### DETAILED DESCRIPTION OF THE PREFERRED EMBODIMENT

### [Embodiment 1]

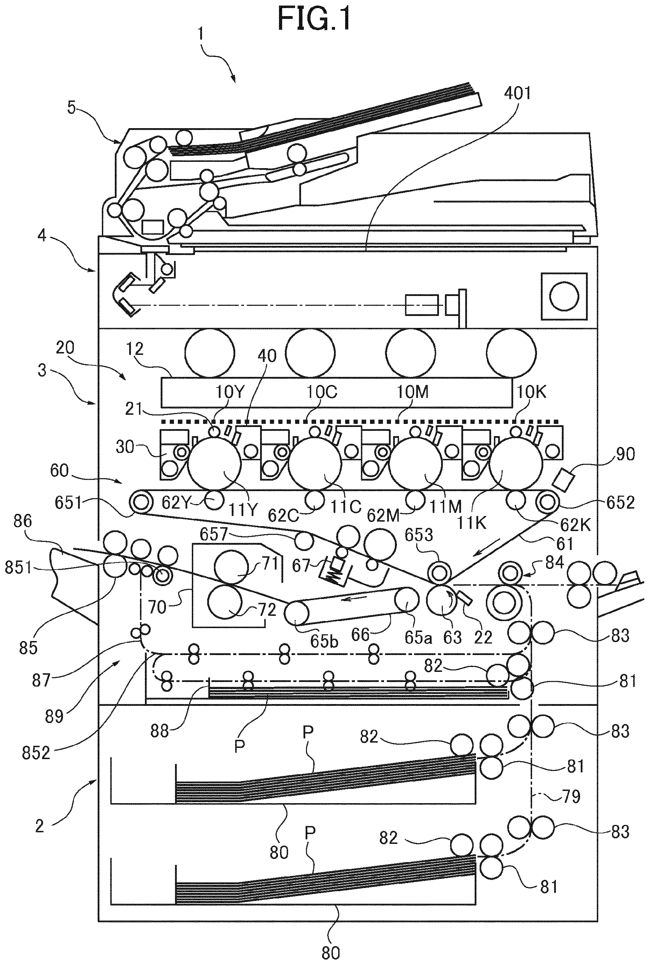

FIG. 1 is a schematic view of an image-forming apparatus according to Embodiment 1. A typical image-forming apparatus of tandem type including an intermediate-transfer belt is shown in FIG. 1 as an example, although the present invention is not always limited to the following configurations.

An image-forming apparatus 1 includes an automatic document-feeder (ADF) 5 which transports stacked documents automatically, a scanner (reading device) 4 which reads the document, and an image-forming part 3 which forms a toner image. A paper-feeding portion 2 which includes and supplies the recording paper P as a recording medium is further provided below the image-forming part 3.

The paper-feeding portion 2 includes a paper-feeding cassette 80 including the stacked recording paper P, a paper-feeding roller 82 which feeds the recording paper P stacked in the paper-feeding cassette 80 toward a transport path 79, and a separating roller 81 which separates the fed recording paper P. The recording paper P is fed by the paper-feeding roller 82, separated by sheet through the separating roller 81, and carried in the transport path 79 through a conveyance roller 83.

A pair of resist rollers 84 is provided on the downstream side of the carrying direction of recording paper P in the transport path 79. The resist rollers 84 sandwich therebetween the recording paper P which is transported by the conveyance roller 83 in the transport path 79, and send the recording paper P to a secondary-transfer nip at a predetermined timing.

The image-forming apparatus 1 includes the image-forming part 3 in the center portion. In the almost center portion of the inside of the image-forming part 3, image-forming units 10 of process cartridges which correspond to each toner color of yellow (Y), magenta (M), cyan (C), and black (K) are provided in parallel in a horizontal side by side direction so as to configure a tandem image-forming part 20.

An exposure device 12 is provided above the four image-forming units 10Y, 10C, 10M, and 10K. The exposure device 12 exposes the surface of each charged photoreceptor 11 according to image data having each color which corresponds to image information scanned by a scanner 4 and separated by each color, thereby, a latent image is formed.

A transfer device 60 in which an intermediate-transfer belt 61 is wound to be rotatable around a driving roller 652, a driven roller 651, and a supporting roller 653 and supports them is disposed below the four image-forming units 10Y, 10C, 10M, and 10K.

Because each image-forming unit 10Y, 10C, 10M, and 10K includes a similar configuration, the indications of Y, C, M, and K are omitted in the figures when the difference between colors is not mentioned.

Each image-forming unit 10Y, 10C, 10M, and 10K includes each photoreceptor 11Y, 11C, 11M, and 11K, respectively. A charging roller 21, a developing device 30, a lubricant-coating applicator (not shown), and a cleaning device 40 are provided around each photoreceptor 11.

The charging roller 21 charges the surface of the photoreceptor. The developing device 30 develops the latent image formed on the surface of the photoreceptor by each color of toner, and forms a toner image. The lubricant-coating applicator applies a lubricant on the surface of the photoreceptor. The cleaning unit 40 cleans the surface of the photoreceptor by a cleaning blade after the toner image is transferred.

The charging roller 21 is configured with a conductive mandrel whose outer surface is covered by an elastic layer having a medium resistance. The charging roller 21 is connected to a not-shown power source. At least one of predetermined direct-current voltage (DC) and an alternating-current voltage (AC) is applied to the charting roller 21.

The charging roller 21 charges the photoreceptor 11 by discharging an electrical current on a portion adjacent to the photoreceptor 11. The charging roller 21 does not have contact with the photoreceptor 11 so as to prevent from being adhered by the untransferred toner from the photoreceptor 11. Thus, the charging roller 21 can be prevented from being stained by the untransferred toner. Herein, the charging roller 21 is not necessarily provided adjacent to the photoreceptor 11 and can be provided to have contact with the photoreceptor 11.

The charging roller 21 includes a not-shown charging-cleaning roller which contacts and cleans the surface of the charging roller 21. Thereby, even if toner floating inside the apparatus is adhered on the surface of the charging roller 21, the charging-cleaning roller can clean the surface of the charging roller 21. Thus, the charging roller 21 can be prevented from being stained.

A developing sleeve which includes inside thereof a not-shown magnetic-field generation portion is provided in the developing device 30 at the position facing the photoreceptor 11.

A stirring-conveyance screw having a lift-up section is provided in the lower portion of the developing sleeve. Toner supplied from a not-shown toner bottle is mixed with a developer, stirred, and lifted up toward the developing sleeve through the lift-up section.

Two-component developer composed of toner conveyed by the developing sleeve and a magnetic carrier is controlled to maintain a predetermined thickness of a developer layer by a controller and held by the developing sleeve. The developing sleeve moves in a constant direction at a position facing the photoreceptor 11, holds and conveys the developer, and supplies toner to the photoreceptor 11.

In addition, each color-toner cartridge containing fresh toner is stored detachably in a space on the upper side of the photoreceptor 11. Through the not-shown toner carriage such as a mono-pump and an air pump, toner is supplied to each developing device 30 as necessary. It can be configured to have a high-capacity toner cartridge for black toner taking into account the large consumption of black toner.

The cleaning device 40 is configured by a cleaning blade, a holder which holds the blade, and so on. The cleaning device 40 removes the remaining toner from the photoreceptor 11 by crimping the blade member to the photoreceptor 11. The removed toner and so on are conveyed to a not-shown waste-toner container by a not-shown waste-toner collecting coil, and stored.

The transfer device 60 includes the intermediate-transfer belt 61 on which a toner image is layered, a primary transfer roller 62 which transfers and layers the toner image formed on the photoreceptor 11 to the intermediate-transfer belt 61, and a secondary transfer roller 63 which transfers the layered toner image on the recording paper P.

The transfer device 60 further includes a supporting roller 653 inside the intermediate transfer belt 61 at a portion facing the secondary-transfer roller 63. A tension roller 657 which presses the intermediate transfer roller 61 from outside and applies a tension is further provided on the outer side of the intermediate-transfer belt 61.

Each primary transfer roller 62, which primarily transfers the toner image formed on the photoreceptor 11 on the intermediate-transfer belt 61, is provided on the position facing each photoreceptor 11 through the intermediate transfer belt 61.

The primary transfer roller 62 is connected to a not-shown power source. At least one of predetermined direct-current voltage (DC) and an alternating-current voltage (AC) is applied thereto. A polar character of the voltage to be applied has an opposite character of the electrical charge of the toner. The primary transfer is performed by drawing the toner image from the photoreceptor 11 toward the intermediate-transfer belt 61 side.

An optical sensor 90 having a predetermined gap in relation to the periphery of the intermediate transfer belt 61 is provided at a position facing the driving roller 652 through the intermediate transfer belt 61. The optical sensor 90 is configured by a reflection-type photo sensor. Light emitted from a not-shown light-emitting element is reflected on the periphery of the intermediate transfer belt 61 or on the toner image formed on the intermediate-transfer belt 61. Then, the optical sensor 90 detects the amount of reflected light by a not-shown light-receiving element.

The not-shown controller detects the toner image on the intermediate-transfer belt 61 and an image density of the toner image (adhesion ratio of toner per unit area) according to the output voltage level obtained by the optical sensor 90.

The toner image which is layered on the intermediate-transfer belt 61 is transferred secondary on the recording paper P through a secondary transfer part which is formed by the secondary transfer roller 63 and the intermediate transfer belt 61 having contact with each other.

The secondary transfer roller 63 is, similar to the primary transfer roller 62, connected to the not-shown power source. At least one of predetermined direct-current voltage (DC) and alternating-current voltage (AC) is applied to the secondary transfer roller 63. A polar character of the voltage to be applied is opposite to that of the electrical charge of toner. Thus, the secondary-transfer is performed by drawing toner from the intermediate-transfer belt 61 toward the recording paper P side and transferring it on the recording paper P.

The secondary transfer roller 63 is configured by a cylindrical mandrel composed of metal, an elastic layer formed on the outer peripheral surface of the mandrel, and a surface layer of resin material formed on the outer peripheral surface of the elastic layer.

As a metal material configuring the mandrel, for example, a metal material such as stainless steel and aluminum can be applied, but it is not limited to these. For the elastic layer which is formed on the mandrel, generally, a rubber material is used and a rubber layer is formed. This is because; an elastic function is required for the secondary transfer roller 63 in order to obtain the secondary transfer-nip portion by deforming the secondary transfer roller 63.

A cleaning blade 22 is provided as a cleaning portion which cleans up the surface of the secondary transfer roller 63. The intermediate transfer belt 61 includes a belt-cleaning assembly 64 which cleans up the surface of the intermediate-transfer belt 61 after the secondary transfer.

A fixing device 70 which fixes the toner image on the recording paper P is provided on the lower portion of the transfer device 60.

The recording paper P on which the toner image is transferred by the secondary-transfer nip is transported into the fixing device 70 via a recording-paper conveyance belt 66 which is wound on two overhanging rollers 65a and 65b.

The fixing device 70 is configured by a fixing roller 71 which includes inside thereof a not-shown halogen heater and a pressure roller 72 provided so as to face and crimp the fixing roller 71.

The fixing device 70 is controlled by a not-shown controller so as to satisfy the most appropriate fixing condition according to printing conditions such as a multicolor printing, monochrome printing, single-side printing, or both-side printing. The fixing conditions are controlled according to the types of the recording media as well.

When a both-side printing mode is selected, the recording paper P having a fixed image on one side is transported to the side of a paper flip-conveyance device 89 through a switching claw 851. The recording paper P reciprocates on a paper-flip path 87 through predetermined conveyance rollers or a not-shown guiding member which are provided in the paper-flip path 87 so as to flip the recording paper P. After the recording paper P is flipped, the conveyance path is changed by a switching claw 852 and the recording paper P is returned to the conveyance path for another image formation. The recording paper P is transported again through the conveyance path and guided towards the transfer position. After the image is transferred and fixed on the opposite side of the recording paper P, the recording paper P is finally ejected on a copy tray 86 by an ejecting roller 85.

In light of the above, when the recording paper P is one sheet, the recording paper P is flipped and passes through the paper-flip path 87 in the paper-flip-conveyance device 89. The recording paper P stops at the resist rollers 84 until the image is formed by the image-forming unit 10. Then, after the image is formed, the recording paper P is transported to the transfer position at an appropriate timing so as to form the image onto the recording paper P. After the image is transferred and fixed to the back side of the recording paper P, the recording paper P is finally ejected on the copy tray 86 by the ejecting roller 85.

Similarly, when many sheets of the recording paper P are provided, the predetermined sheets of the recording paper P having the toner image on one side are stored once in a paper-flip storage 88 of the paper-flip-conveyance device 89. Subsequently, the recording paper P is fed from the paper-flip storage 88 by the paper-feeding roller 82, separated one by one through the separating roller 81, and transported by the conveyance roller 83. Then, the recording paper P stops at the resist rollers 84 again until the image is formed by the image-forming unit 10, and the image is formed on the recording paper P. After the image is transferred and fixed on the back side of the recording paper P, the recording paper P is finally ejected on the paper tray 86 by the ejecting roller 85.

As shown in the configuration of FIG. 1, the intermediate-transfer belt 61 is wound around the driving roller 652 and the driven roller 651 so as to form an extending surface along a direction parallel to image-forming stations for each color which are provided with the tandem-type image-forming apparatus.

On the other hand, a tension roller 657 is provided in the extending surface between the supporting roller 653 and the driven roller 651 on the transfer position provided on the lower side of the driving roller 652. The tension roller 657 which curves the extending surface inside from the outer side of the belt is provided such that it pushes the extending surface from the outer side of the belt.

Because the tension roller 657 is provided as described above, and the extending surface goes upward by the tension roller 657, a space can be formed below the curve portion of the intermediate-transfer belt 61 which has a curvature toward inside of the belt.

Thereby, the fixing device 70 and so on can be provided in the space formed below the curve of the intermediate transfer belt 61 so that the inner space along the longitudinal direction of the image-forming apparatus can be utilized effectively. Thus, the longitudinal size of the image-forming apparatus can be reduced. Miniaturization of the image-forming apparatus can be achieved by such an effective utilization of a space.

### [Intermediate transfer belt]

Hereinafter, the intermediate-transfer belt 61 which is appropriately applied to the image-forming apparatus according to Embodiment 1 will be described.

In Embodiment 1, a conductive-resin belt described as follows is used as the intermediate-transfer belt 61: that is, the intermediate-transfer belt 61 is configured by an incompatible-polymer alloy composed of at least one crystalline resin selected from the following first group, and at least one amorphous resin selected from the following second group. In this regard, the weight ratio between the crystalline resin and the amorphous resin is from 70:30 to 95:5. Carbon as a first conductive agent is unevenly distributed within a successive layer only, and at least one second conductive agent which is selected from the following third and fourth groups is also distributed within the successive layer only. A flame resistivity of the belt is VTM - 0 under the condition that the thickness thereof is 50 to 150 µm at the UL94 standard.

[First group] polyphenylenesulfide (PPS), polyetheretherketone (PEEK), polyvinylidene difluoride (PVDF)
[Second group] polyethersulfone (PES), polycarbonate (PC), polyphenyleneether (PPE), polysulfone (PSF), polyarylate (PAR)
[Third group] ZnO particles, SnO₂ particles, Sb-doped SnO₂ particles, In-doped SnO₂ particles, P-doped SnO₂ particles
[Fourth group] Oxide particles covered by one of the particles listed in the third group

Thereby, the problems in relation to mechanical properties, electric properties, flame resistivity, surface smoothness, resistance controllability, and molding stability can be solved. Therefore, the rupture of the belt during belt running can be prevented, image defects such as white spots can be prevented, and control of the properties can be performed easily so that the reproducibility can be maintained, cost reduction can be achieved, and high-level safety requirements can be satisfied because of the flame resistivity.

Values of the properties which are required for the intermediate-transfer belt, and values of the properties which are required when it is manufactured by extrusion molding are as follows.
1. Mechanical properties
   (1) Flex resistance (MIT test): JIS-P8115, over 500 times (Film thickness 70 ± 10 [µm])
   (2) Tensile elasticity: JIS-K7127 compliant, over 1800 [MPa]
2. Electric properties
   (1) Surface resistivity: 10⁶ to 10¹⁴ [ohms per square], preferably 10⁸ to 10¹² [ohms per square] (under arbitrarily voltage from 100 to 500 [V])
   (2) Volume resistivity: 10⁶ to 10¹⁴ [ohm-cm], preferably 10⁸ to 10¹² [ohm-cm] (under arbitrarily voltage from 100 to 500 [V])
   (3) Voltage dependency (surface resistivity): within single digits (from 100 to 500 [V])
   (4) Voltage dependency (volume resistivity): within double digits (from 100 to 250 [V])
   (5) Environmental dependency (surface resistivity): within 0.5 digits (between 10 [°], 10 [%] RH and 30 [°], 90 [%] RH)
   (6) Environmental dependency (volume resistivity): within single digits (between 10 [°], 10 [%] RH and 30 [°], 90 [%] RH)
3. Flame resistivity: VTM-0, with thickness of 50 to 150 [µm], at the UR 94 standard
4. Surface smoothness: 70 or more at 20 degrees mirror-glossiness (use PG - 1, product of NIPPON DENSHOKU INDUSTRIES CO., LTD)
5. Resistance controllability:
   The reproducibility in the variation of the electric property upon the change of manufacturing condition is high.
   The variation ratio [log-ohms per degree] of the volume resistivity according to the molding temperature is less than 0.2.
6. Molding stability:
   Raw resin can be supplied stably and sustainably by the screw in the extruder.
   The resin-melt pressure does not fall below 2 [MPa] for more than 30 minutes in the moldability-testing machine.

In essence, polymer-alloy includes a successive layer including resin at high compounding ratio and a disperse layer (dispersed phase) including resin at low compounding ratio. In Embodiment 1, the polymer formulation is decided based on keen examination so that both of carbon and a conductive agent other than carbon can be distributed unevenly in the successive layer only.

Herein, "distribute unevenly" represents the condition that the existing probability of a conductivity-imparting agent in the successive layer or in the disperse layer is more than about 95 [%].

Conventionally, the following components are put into practical use as flame-resistant thermoplastic resin. Such components include: fluoride resin such as polyvinylidene chloride, polyarylate resin, polyphenylene sulfide resin, polyethersulfone resin, polysulphone resin, polyether-imide resin, polyetheretherketone resin, thermoplastic polyimide, and liquid-crystal polymer.

As a conductive endless belt including the flame-resistant thermoplastic resin, a conductive endless belt including polyethersulfone, liquid-crystal polymer, and a conductive filler is disclosed in JP2006-098602A.

However, such a conductive endless belt has a problem in that cracking of the end portion is apt to occur during belt-running because its flex resistivity is low, so the durability is deteriorated.

JP2003-107930A discloses a method to control the volume resistivity and the surface resistivity separately to be predetermined values through which each different conductive agent is distributed unevenly in the disperse layer and the successive layer.

The resistivity can be maintained by such a method to be a prescribed value easily; however, the degradation of the voltage dependency is inevitable in the case carbon as a conductive agent is distributed unevenly in the disperse layer.

In addition, in JP2003-107930A, polyether ester amide is separately provided as a second conductive agent in addition to carbon. However, in the case carbon is distributed unevenly in the successive layer, each of the polyether ester amide and carbon is to be included in separate area. Therefore, it is difficult to improve the voltage dependency through the combination of the different conductive mechanisms.

Furthermore, when focusing most on the production of a flame-resistant belt assembly, an organic conductive agent such as polyether ester amide cannot resist the molding temperature of thermoplastic resin, and cannot avoid the beginning of a breakdown reaction. Therefore, an inorganic agent other than carbon which is represented by a metal oxide is necessary as the second conductive agent.

In light of the above-described conventional techniques, an approach to satisfy the mechanical properties or flame-resistivity of the conductive-resin belt provided in the intermediate transfer belt 61 according to present Embodiment 1 is described at first.

Polyphenylenesulfide (PPS) is a flame-resistant crystalline polymer having a composition as shown in the following Formula 1. According to a broad classification, there are a crosslinking-pattern polymer and a linear polymer. Herein, the linear polymer is appropriate for manufacturing a thin-film belt member as the intermediate-transfer belt 61. It is appropriate to avoid using the cross-linking polymer or to use such a polymer at minimum because it includes a large amount of gelling agent which shows up as a foreign-object defect on the surface after the film is formed.

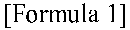

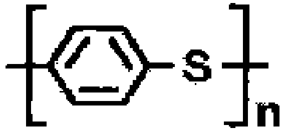

Polyetheretherketone (PEEK) is a flame-resistant crystalline polymer having a composition shown in the following Formula 2. However, it is not necessarily limited and can be a modified agent with the other materials. The flex resistivity (number by MIT test) can be significantly increased with a polymer alloy of PEEK, similar to PPS.

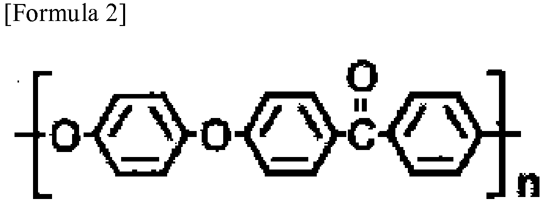

Polyvinylidene Difluoride (PVDF) is a flame-resistant crystalline polymer having a configuration shown in the following Formula 3. The flex resistivity (number by MIT test) can be significantly increased with a polymer alloy of PVDF, similar to PPS. However, the elastic modulus in mechanical properties of the film becomes insufficient in a film of PVDF homopolymer blended with carbon.

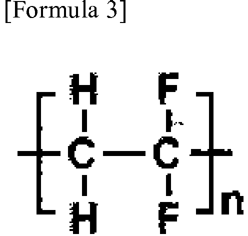

Polyethersulfone (PES) is a flame-resistant amorphous polymer including the configuration shown in the following Formula 4. It is not necessarily limited to the above and can be modified with the other materials. However, the flex resistivity (MIT value) in the mechanical properties of the film becomes insufficient in the film of PES homopolymer blended with carbon.

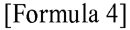

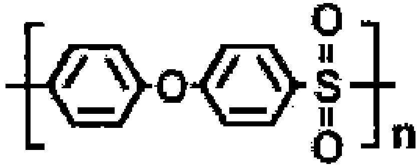

Polycarbonate (PC) is an amorphous polymer having a configuration shown in the following Formula 5, but it is not a flame-resistant polymer. The flex resistivity (MIT value) in the mechanical properties of the film becomes insufficient in a film of the PC homopolymer blended with carbon.

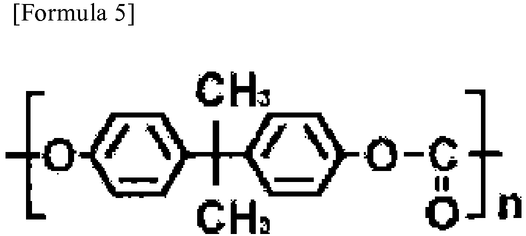

Polyphenyleneether (PPE) is an amorphous polymer having a configuration shown in the following Formula 6, but it is not a flame-resistant polymer. The flex resistivity (MIT value) in the mechanical properties of the film becomes insufficient in a film of PPE homopolymer blended with carbon.

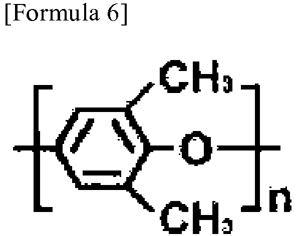

Polysulfone (PSF) is an amorphous flame-resistant polymer having a configuration shown in the following Formula 7. The flex resistivity (MIT value) in the mechanical properties of the film becomes insufficient in a film of PSF homopolymer blended with carbon.

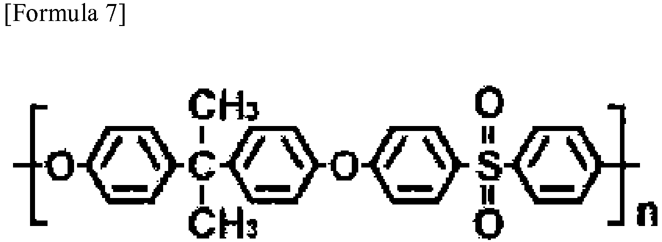

Polyarylate (PAR) is an amorphous flame-resistant polymer having a configuration shown in the following Formula 8. The flex resistivity (MIT value) in the mechanical properties of the film becomes insufficient in a film of PAR homopolymer blended with carbon.

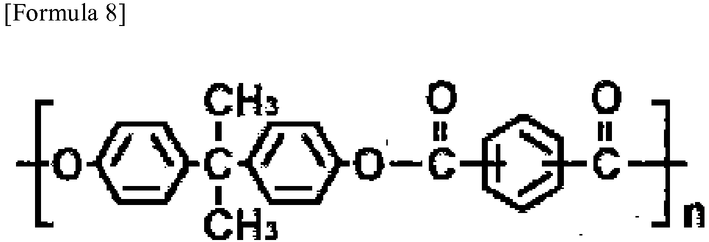

As described above, the homopolymer which satisfies both the requirements of mechanical properties and flame resistivity is strictly limited. Thus, the flexibility in the solutions to the remaining problem in relation to improving the electric properties and the resistance control cannot be ensured.

As a result of the inventor's consideration regarding alloying of polymers with each other, the above-described mechanical properties or flame resistivity can be achieved through a synergistic effect of alloying even if each property of the materials is insufficient.

Herein, the properties of the conductive-resin belt can be improved by alloying so as to maintain simply the average value of the properties of the resin itself before alloying, but on the other hand, it is obvious that it falls below or exceeds considerably the properties of the polymer before alloying. By avoiding or taking advantage of such a change of the properties of the conductive-resin belt, the polymer-alloy treatment to solve the problem in the mechanical properties or the flame-resistivity is systematized.

Herein, as for the flame resistivity, a condition in which the conductive agent is distributed in the successive layer is essential, as later described.

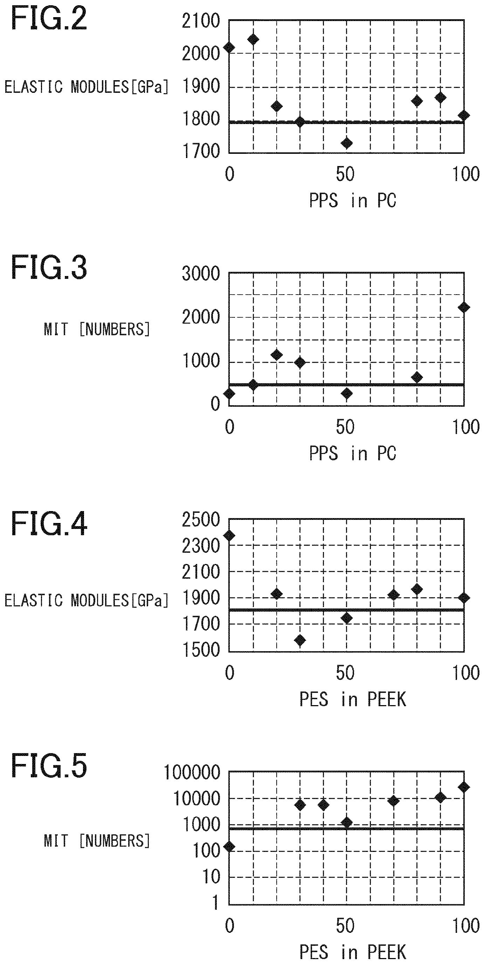

For example, FIG. 2 illustrates an elastic modulus of the conductive-resin belt configured by a polymer alloy of polyphenylenesulfide (PPS) as a crystalline resin and polycarbonate (PC) as an amorphous resin. FIG. 3 illustrates the MIT value thereof.

When the weight ratio between polyphenylenesulfide (PPS) as the crystalline resin and polycarbonate (PC) as the amorphous resin is from 10:90 to 30:70, and from 70:30 to 10:0, both of the elastic modulus and MIT value exceed each target value.

As another example, FIG. 4 illustrates the elastic modulus of the conductive-resin belt configured by a polymer alloy of polyetheretherketone (PEEK) as a crystalline resin and polyethersulfone (PES) as an amorphous resin. FIG. 5 illustrates the MIT value thereof.

Since the weight ratio between polyetheretherketone (PEEK) as a crystalline resin and polyethersulfone (PES) as an amorphous resin is from 15:85 to 20:80, and from 60:40 to 100:0, both of the elastic modulus and the MIT value exceed each target value.

Other than the above, all combinations are considered which include a polymer alloy of polyphenylenesulfide (PPS) and polyethersulfone (PES), and a polymer alloy of polyphenylenesulfide (PPS) and polyphenyleneether (PPE).

Consequently, as long as the selection is performed between the crystalline resin indicated in the first group and the amorphous resin indicated in the second group, each target value of the flame-resistivity, modulus of elasticity, and MIT value is always achieved under any combinations when the weight ratio between the crystalline resin and the amorphous resin is in from 70:30 to 100:0.

Subsequently, an approach to satisfy the electric properties, surface smoothness, resistance controllability, and molding stability for the conductive-resin belt provided in the intermediate transfer belt 61 according to Embodiment 1 will be described as follows.

At first, an example in which a single type of conductive agent (carbon) is blended into a single type of homopolymer is considered. In this case, faults described as follows occur.

The blending amount of carbon becomes too much and the surface smoothness cannot be maintained because the polymer alloy is not applied;
When carbon including a large scale of specific surface area such that the blending ratio of carbon can be low is used, the sensitivity in detecting the resistance value becomes too high and the variation of the resistance value according to the condition of manufacturing cannot be controlled. In addition, the voltage stability of the resistance value decreases significantly;
The voltage dependency of the resistance value is deteriorated;
When using amorphous resin only, almost all mechanical properties which are described as above cannot be satisfied;
When using crystalline resin only, the molding stability is undermined.

Subsequently, an example in which a single type of conductive agent (metal oxide) is blended into a single type of polymer is considered. In this case, the following faults occur.

The blending amount of the conductive agent is significantly increased and it becomes difficult to maintain the surface smoothness because the polymer alloy is not applied;
The environmental dependency of the resistance value is deteriorated;
Almost all of the above-described mechanical properties cannot be satisfied when using amorphous resin only;
The molding stability is deteriorated when using crystalline resin only.

Subsequently, an example in which two types of conductive agents (carbon and metal oxide) are blended into a single type of polymer is considered. In this case, faults described as follows occur.

The blending amount of the conductive agent significantly increases and it becomes difficult to maintain the surface smoothness because the polymer alloy is not applied;
Almost all of the above-described mechanical properties cannot be satisfied when using amorphous resin only;
The molding stability is deteriorated when using crystalline resin only.

Subsequently, an example in which a single type of conductive agent (carbon) is blended into two-type polymers (polymer alloy) is considered. In this case, a fault such that the voltage dependency of the resistance value is deteriorated occurs.

Subsequently, an example in which a single type conductive agent (metal oxide) is blended into two-type polymers (polymer alloy) is considered. In this case, a fault such that the environmental dependency of the resistance value is deteriorated occurs.

Subsequently, an example in which two-type conductive agents (carbon and metal oxide and so on) are blended into two-type polymers (polymer alloy) and both types of conductive agents are distributed unevenly within the disperse layer is considered. In this case, faults described as follows occur.

The mechanical strength cannot be maintained because the conductive agents are distributed unevenly;
The voltage dependency cannot be maintained because the conductive agents are distributed unevenly;
The surface smoothness cannot be maintained because the conductive agents are distributed unevenly;
The case in which the flame-resistivity cannot be maintained can be considered because the conductive material is not distributed in the successive layer.

Subsequently, an example in which two-type conductive agents (carbon and metal oxide) are blended into two-type polymers (polymer alloy) and only carbon of the conductive agents is distributed unevenly in the disperse layer is considered. In this case, faults described as follows occur.

Because carbon is not distributed in the same area as the conductive agent other than carbon, the improvement in the voltage dependency by filling the conductive agent other than carbon in between carbon cannot be expected;
The mechanical strength cannot be maintained because carbon is distributed unevenly;
The surface smoothness cannot be satisfied because carbon is distributed unevenly;
The voltage dependency cannot be maintained because carbon is distributed unevenly;
In order to improve the voltage dependency, the cost becomes high because it is necessary to add a large amount of the conductive agent other than carbon;
When the conductive agent is distributed in the disperse layer, the location deviation of the resistance value cannot be minimized without equalizing the sizes of the dispersing area which differ according to the melt-kneading condition, or according to surface or the inner side of the film;
If a compatibilizer is added in order to equalize the sizes of the disperse layer, a foreign-material deficit is generated on the film, so an image defect occurs;
Even if the sizes of the disperse layer are equalized, it is necessary to control the aspect ratio of the disperse layer according to the manufacturing conditions.

Subsequently, an example in which two conductive agents (carbon and metal oxide) are blended into two-type polymers (polymer alloy) and the conductive agent other than carbon is distributed unevenly in the disperse layer is considered. In this case, faults described as follows occur.

Because carbon is not distributed in the same area as the conductive agent other than carbon, the improvement in the voltage dependency by filling the conductive agent other than carbon in between carbon cannot be expected;

When the conductive agent is distributed in the disperse layer, the location deviation of the resistance value cannot be minimized without equalizing the sizes of the dispersing area which differ according to the melt-kneading condition or according to the surface or the inner side of the film;
If the compatibilizer is added in order to equalize the sizes of the disperse layer, a foreign material deficit is generated on the film so an image defect occurs;
Even if the size of the disperse layer is equalized, it is necessary to control the aspect ratio of the disperse layer according to the manufacturing conditions.

Lastly, as the conductive-resin belt which is provided in the intermediate-transfer belt 61 according to Embodiment 1, an example in which two-type conductive agents (carbon and metal oxide and so on) are blended in two-type polymers (polymer alloy) and both of the conductive agents are distributed unevenly in the successive layer is considered. In this case, as described in the following, no fault should occur.

Because polymer alloy is used, the blending ratio of the conductive agent is adequately lowered so that the surface smoothness and the mechanical properties can be satisfied;
Because the conductive agent is not distributed unevenly in the disperse layer, the mechanical properties, the surface smoothness, and the voltage dependency are not deteriorated;
Because of the use of metal oxide, the environmental dependency of the resistance value is satisfied;
The conductive agent other than carbon is co-existent with carbon in the same area, the voltage dependency can be satisfied;
Because the conductive agent is not distributed unevenly in the disperse layer, the resistance value of the successive layer is not changed significantly even if the size of the disperse layer changes comparatively. Therefore, the stability in manufacture can be achieved;
Because the conductive agent is not distributed in the disperse layer, the possibility of insufficient flame resistivity can be considered. However, the flame resistivity can be ensured if the abundance ratio of the disperse layer is set to 30 % or less.

As described above, only the approach in which two-type conductive agents (carbon and metal-oxide) are blended in two-type polymers (polymer alloy) and both of the conductive agents are kept distributed unevenly in the successive layer can achieve the electric properties, surface smoothness, resistance control, molding stability at the same time. Then, the above-described selection result of polymer satisfying the mechanical properties and the flame resistivity is combined with the approach.

Thereby, the conductive-resin belt in which all of the mechanical properties, electric properties, flame-resistance, surface smoothness, resistance controllability, and molding stability are satisfied at the same time can be obtained.

Essentially, the polymer herein can be selected to be many types as long as it includes more than two types of polymers. Similarly, the conductive agent can be selected to be many types as long as it includes more than two types and at least one of them is carbon. It does not affect the process for achieving the various types of effects as described above.

In addition, the conductive-resin belt which is provided in the intermediate-transfer belt 61 according to Embodiment 1 of the present invention includes the flame-resistivity of VTM-0 at the UL94 Standard.

As described above, the conductive-resin belt having the flame resistivity can be obtained from the configuration as described above. All such belts can easily maintain the flame resistivity of VTM-0 at the UL 94 Standard by increasing the thickness of the film or by increasing the additive amount of the conductive agent. Therefore, higher-level safety standards can be satisfied by maintaining the flame resistivity of VTM-0 at the UL 94 Standard.

Within the crystalline resin shown in the above-described first group, polyetheretherketone (PEEK) is a high-cost material. It can be used herein but the blending ratio of the metal-oxide is limited on account of the cost issue. Therefore, only in the case in which the cost reduction is required it is appropriate to select polyphenylenesulfide (PPS) or polyvinylidene difluoride (PVDF) as crystalline resin.

Polyvinylidene difluoride (PVDF) of the crystalline resin included in the first group has lower flexibility as described in the later-described Embodiment 2. Therefore, in the case in which the longer-operating product is required, it is appropriate to select polyphenylenesulfide (PPS) or polyetheretherketone (PEEK) as crystalline resin.

Therefore, the above-described effect can be maximized when one or more types of polymer including at least polyphenylenesulfide (PPS) are selected from the crystalline resin included in the first group.

For instance, polyphenylenesulfide (PPS) is selected from the crystalline resin in the first group and polycarbonate (PC) is selected from amorphous resin in the second group. Thereby, the cost-reduction can be achieved at highest in comparison with the other combinations. This is simply caused by the material prices of these two types of resin which configure the polymer alloy.

Similarly, when polyphenylenesulfide (PPS) is selected from the crystalline resin in the first group and polyethersulfone (PES) is selected from amorphous resin in the second group, the mechanical properties can be maintained at the highest degree in comparison with the other combinations.

This is because the disperse layer of polyethersulfone (PES) represented in the successive layer of polyphenylenesulfide (PPS) is dispersed minutely so as to have its domain diameter (particle size) to be about 50 [nm].

For instance, polyphenylenesulfide (PPS) is selected from crystalline resin in the first group and polyphenyleneether (PPE) is selected from amorphous resin in the second group. Thereby, a conductive-resin belt can be obtained in which projections and defects caused by foreign materials can be prevented at maximum in comparison with the other combinations.

This is because each appropriate molding temperature of polyphenylenesulfide (PPS) as crystalline resin and polyphenyleneether (PPE) as amorphous resin is similar, and the molding can be performed at the same time as the heat-deterioration of the resin can be prevented.

Polymer alloy can be dispersed minutely by being blended with the compatibilizer selected from the following fifth group.

### [Fifth group]

### ethylene-glycidyl methacrylate copolymer, oxazoline group-containing polymer

In essence, in the polymer alloy containing more than two types of resin, most of the dispersing tendency is decided by the congeniality between each resin. Therefore, according to the combination of polymer alloy, the size of the disperse layer is significantly increased at several hundred [nm] when the polymer alloy is configured by blending crystalline resin in the first group and amorphous resin in the second group.

In this case, the surface smoothness is detracted. The size of the disperse layer can be reduced by selecting an appropriate compatibilizer in the fifth group and alloying the polymer. Thereby later-described problems can be solved, the choice of the manufacturing condition increases, and the properties can be improved.

For example, the polymer-alloying is performed by selecting polyphenylenesulfide (PPS) from the crystalline resin of the first group, polycarbonate (PC) from the amorphous resin of the second group, and ethylene-glycidyl methacrylate copolymer from the fifth group. Thereby, the later-described problem can be solved without the strict setting of the melting and kneading condition of raw resin.

The problem herein corresponds mainly to the mechanical properties, electrical properties, and surface smoothness. In detail, the compatibilizer is provided when the mechanical properties are too low, the resistivity is too low, the voltage dependency of the resistivity is worse, or the surface smoothness is too low.

The addition of the material in the fifth group is not always necessarily as long as the kneading condition and so on is decided and maintained under strict conditions. On the other hand, such an addition is effective when it is requested to solve the problem earlier through the combination of the polymer alloy or when the process window to solve the problem is requested to expand.

The circumstance in which the compatibilizer itself forms a slight disperse layer can be considered. However, in such a case, the disperse layer of amorphous resin can include another disperse layer of the compatibilizer, or the successive layer of the crystalline resin can include the disperse layer of the compatibiliizer.

If the compatibilizer other than those shown in the fifth group is used, gas or a foreign object is generated in relation to the problem concerning the flame resistivity or the reactive property. It is important to select the compatibilizer from two of those shown in the fifth group.

Next, the above-described second conductive agent which is provided in the conductive-resin belt according to Embodiment 1 will be described below.

As shown in the above-described third and fourth groups, SnO₂ particles, Sb-doped SnO₂ particles, or oxide particles covered by Sb-doped SnO₂ can be used as the second conductive agent.

When ZnO particles (Zinc oxide) is selected from the above-described metal-oxide system conductive agent in the third and fourth group and used as the second conductive agent, the cost reduction can be achieved at most in comparison with the other metal-oxide system conductive agents. Herein, ZnO particles provided as the second conductive agent in Embodiment 1 is conductive metal-oxide. It includes, for example, a conductive material such as Al.

It is obvious from the experiment that it has a strong tendency in which the volume resistivity is deteriorated and the surface smoothness is not significantly deteriorated when SnO₂ particles and Sb-doped SnO₂ particles, or the metal-oxide particles covered by Sb-doped SnO₂ are selected and used from the metal-oxide system conductive agent shown in the third and fourth groups. Such an effect is utilized in solving the problems as follows.

The following instances are obvious in relation to the extrusion molding of thermoplastic resin including carbon. That is, carbon is arranged in the direction inside the extruding surface and the volume resistivity (resistance in the film thickness direction) increases under the condition that the melt viscosity of the resin is too low, the molding temperature is too high, the resin floating path in the extruder is too long, or the stretching degree during the cold-hardening of resin is too high.

In relation to the types of resin, the control of such an arrangement of carbon is limited as long as the extrusion molding is provided. It is difficult to realize the dispersing condition of carbon in which anisotropy is avoided completely.

In light of the above, when the intermediate-transfer belt (conductive-resin belt) in which the voltage resistivity is lower than the surface resistivity is requested, SnO₂ particles, Sb-doped SnO₂ particles, or metal-oxide particles covered by Sb-doped SnO₂ is used although the costs of these are a little higher than ZnO particles. Thereby, the voltage resistivity decreases appropriately and the desired resistivity can be achieved.

Similarly, ZnO particles, P-doped system, and In-doped system sufficiently include such an effect in which the voltage resistivity decreases. However, in light of the effect of the cost reduction, SnO₂ particles, Sb-doped SnO₂ particles, or metal-oxide particles covered by Sb-doped SnO₂ can lower the volume resistivity efficiently.

The reason to add the metal-oxide system conductive agent of the third and fourth groups is not limited to the reducing volume resistivity only. That is, improvement in the voltage dependency of the resistivity and the environmental dependency of the resistivity are also expected. Similarly, the degradation of the mechanical strength, degradation of the surface smoothness caused by the large amount addition of carbon, and the generation of surface projections and defects caused by the large amount addition of carbon can be prevented, and the flame-resistance can be achieved through the effect of the metal-oxide system conductive agent.

Therefore, if the reduction of the volume resistivity is not required in the intermediate-transfer belt (conductive-resin belt), it is necessary to add one of the metal-oxide system conductive agent of the third group or the fourth group. Almost all problems described above cannot be solved without the addition of the metal-oxide system conductive agent of the third group or the fourth group.

It is appropriate that the intermediate-transfer belt 61 have the volume resistivity (Rv 100) in between 10⁶ and 10¹⁴ [ohm-cm] under the measured voltage of 100 [V], and have the surface resistivity (Rs 500) in between 10⁶ and 10¹⁴ [ohms per square] under the measured voltage of 500 [V]. Thereby, the conductive-resin belt can maintain the resistivity so as to be mounted on the image-forming apparatus easily.

It is more preferable that the volume resistivity (Rv 100) of the conductive resin belt be in between 10⁸ to 10¹² [ohm-cm] under the measured voltage 100 [V], and the surface resistivity (Rs 500) is in between 10⁸ to 10¹² [ohms per square] under the measured voltage of 500 [V]. Thereby, the conductive-resin belt can maintain the resistivity so as to be mounted on the image-forming apparatus more easily.

In Embodiment 1, the volume resistivity is measured under the condition of the measured voltage 100 [V] and 10 [msec] value, and the surface resistivity is measured under the condition of the measured voltage 500 [V] and 10 [msec] value by using Hiresta UP MCP-HT450 of Mitsubishi Chemical Analytech Co.,Ltd.

In addition, the conductive-resin belt provided with the intermediate-transfer belt 61 according to Embodiment 1 of the present invention is manufactured through at least a following step. That is, a melt-kneaded product is obtained in the melting/kneading step by melting and kneading at least one crystalline resin selected from the first group, at least one amorphous resin selected from the second group, carbon as a first conductive agent, and at least one second-conductive agent selected from the third and fourth groups. Then, the molded product is obtained by providing the extrusion molding to the melt-kneaded product in the molding step.

Herein, the location where the conductive agent is distributed unevenly can be controlled by providing especially the kneading according to the predetermined blending sequence at the predetermined temperature.

In the molding step, a cylindrical member, a so-called mandrel, is provided on the lower portion of a dice. The melted/kneaded product is cooled until it becomes under the glass transition point at the mandrel.

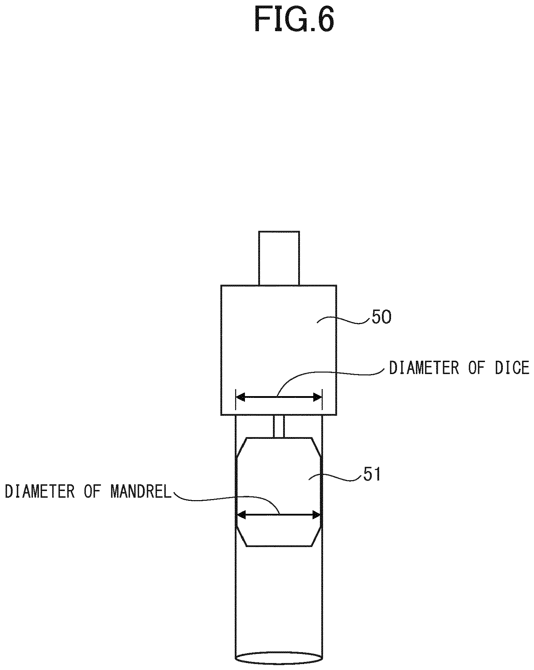

In detail, as shown in FIG. 6, a spiral dice 50 of an annular dice is used as the dice. The mandrel 51 is connected directly to the lower portion of the spiral dice 50.

A not-shown oil temperature controller is connected to the mandrel 51 so as to control the temperature of the mandrel 51. The temperature of the mandrel 51 is, for example, set to be under the glass transition point of the melt-kneaded product (polymer alloy) so that the melt-kneaded product (polymer alloy) is fixed by the time it passes through the mandrel 51. Thereby, the molded product obtained by the extrusion-molding has the same size (perimeter) as the diameter of the mandrel 51.

Because the mandrel 51 is arranged on the lower portion of the spiral dice 50, the perimeter (size) of the molded product obtained by the extrusion molding can be controlled stably. In addition, many effects in relation to the manufacturing control can be expected such that the influence of air can be reduced, the influence of fluctuation can be reduced, and the preparation before manufacture can be simple.

As described above, when the intermediate-transfer belt (conductive-resin belt) is designed so as to reduce anisotropy in its properties, especially in the electrical properties, it is appropriate to have the relationship between the diameter of the dice and the diameter of the mandrel correspond to each other (one for one).

On the other hand, the diameter of the mandrel can be controlled to be about minus 10 % in relation to the diameter of the dice, without any additional molding apparatus. According to conditions, the diameter of the mandrel can be determined to be about minus 50 % of the diameter of the dice in order to reduce especially the deviation of the film thickness of the intermediate-transfer belt (conductive-resin belt).

If flame resistivity is not aimed at herein, the materials can be selected with no limitation. Therefore, the various material combinations providing the desired mechanical properties or electrical properties can be considered as shown in the later-described approaches. Conversely, if flame resistivity is aimed at, none of the later-described approaches come into effect with the problem of material selection.

JP4298480B discloses an approach in which resistance control can be achieved in the middle-resistance range under the condition that the polymer alloy includes a conductive filler as the conductive agent which is distributed unevenly in the disperse layer at more than 80 [%]. Conventionally, it has been considered to be difficult.

It is possible to measure the resistivity easily by the above-described approach. However, the voltage dependency of the resistivity becomes inevitably worse because the conductive agent is distributed unevenly in the above approach in principle.

JP2002-544308A discloses an approach in which a polymer alloy includes carbon as the conductive agent distributed unevenly in the successive layer.

However, the voltage dependency is deteriorated because an inorganic conductive agent other than carbon is not added thereto.

JP4575970B discloses an approach in which carbon is not used but an ion-conductive agent is used and the conductive agent is dispersed unevenly in the disperse layer in order to reduce the environmental dependency at minimum.

However, the environmental dependency aimed therein is a 1.7-times-larger target value than that of Embodiment 1 of the present invention. Thus, the problems to be solved in Embodiment 1 cannot be solved according to the above-described approach of JP4575970B. In addition, the materials are selected without taking into account the flame resistivity.

JP2005-292208A discloses a conductive-thermoplastic resin film including polyethersulfone, polyetheretherketone, and a conductive component.

The flame resistance can be achieved through the above-described combination but the desired mechanical properties cannot be achieved.

JP2010-195957A discloses a transfer belt in which the variation of the resistance value is minimized by including resin A as the dispersion layer in which the conductivity-imparting agent is dispersed preferentially, and including resin B as the successive layer in which the dispersion of the conductivity-imparting agent is relatively low.

However, when the conductivity-imparting agent is distributed unevenly in the disperse layer, the sensitivity of the resistivity in relation to the additional ratio of the conductivity-imparting agent becomes too high to control the resistance, and the kneading process becomes complicated in order to disperse resin A strongly. Thus it includes a problem such that it is hard to realize.

JP2000-137389A discloses a transfer member having an endless belt configured by polyarylate resin of amorphous resin.

However, the flex resistivity in the desired mechanical properties cannot be satisfied with the amorphous resin only.

JP4844559B discloses a polyphenylene-sulfide resin composition composed by polyphenylene-sulfide resin, polyether-imide resin or polyethersulfone resin, and a compatibilizing agent including epoxy group, amino group and isocyanate group.

In addition, an example in which conductive filler is blended is also disclosed. However, the thin film (50 to 80 [µm]) in such a combination cannot satisfy the flame resistance of VTM-0 in the UL 94 Standard. The flame resistance thereof becomes VTM-1.

JP3948227B discloses a transfer belt composed of polymer alloy of crystalline resin and amorphous resin. The belt includes each of sea-island structures having different structure according to the surface and the central portion in the thickness direction so as to achieve environmental stability of the resistance.

However, in light of the above, it requires a chemical bond between the crystalline resin and the amorphous resin, so the manufacturing process becomes complicated. In addition, the flame resistivity is not satisfied because the polymer alloy is composed by the combination of polyalkylene terephthalate and polycarbonate.

JP4391142B discloses an approach to provide a flame-resistant conductive component which is not black by blending amorphous polyester resin, pigment and tetraalkylammonium sulfite (or sulfite) with polyvinylidene difluoride.

If the mechanical properties and the cost problem of the conductive agent are not considered and the satisfaction of the other properties is only aimed at, the above-described method has no problem. However, taking into account the deterioration of the folding endurance and cost reduction of the conductive agent, the co-use of carbon is inevitable. Upon using carbon, resistance control becomes rapidly difficult, so the invention according to present Embodiment cannot be achieved without the obvious point of view to include a conductive agent in the successive layer unevenly.

JP2003-238822A discloses a conductive resin component in which a layer (A) which does not include conductive particles (X) forms a disperse layer in the successive layer of the layer (B) including conductive particles (X). This design aims to minimize the additional amount of the expensive conductive agent at most.

However, because such a design is considered focusing on the generation of the resistance value, the blending ratio of the disperse layer is more than 30 [wt %]. This results in the resistance value being significantly lowered as is obvious in our experiment, but the folding endurance is insufficient.

In addition, because the purpose of the above approach is decided focusing on the prevention of electrostatic charge, it can be considered that such an approach is especially designed so as to reduce the resistance value. In addition to the lack of folding endurance, the voltage dependency of the resistivity is also insufficient in such a component.

JP3888038B discloses an approach in which carbon filler and so on is distributed unevenly on a surface and a metal-oxide filler is distributed unevenly on the opposite-side surface by the control of centrifugal force at the time of centrifugal molding of a thermosetting resin. Thereby, resistance control and strength control of an inexpensive resin material can be achieved.

However, the manufacturing cost of centrifugal molding cannot be lowered compared with that of extrusion molding.

In light of the above-described various approaches, material selection is given serious consideration so that the conductive resin which is used in the intermediate transfer belt 61 according to the present Embodiment can always satisfy the flame-resistance at the same time as maintaining the mechanical properties, electric properties, surface smoothness, resistance controllability, and molding stability. It is discovered and systemized that such a purpose can be achieved by the combination of specific materials within a strictly limited range

### [Experiment]

Next, an evaluation experiment of target values of a property as an intermediate-transfer belt, and a property required in the extrusion molding in the manufacturing process is described.

Blending conditions of each material for the conductive-resin belt according to Examples 1 to 12, and the conductive-resin belt according to Comparative Examples 1 to 17 as the target object for the evaluation are indicated at first.

### [Example 1 - not part of the present invention]

Crystalline resin: polyphenylenesulfide (PPS) 80 [%], Amorphous resin: polyethersulfone (PES) 20 [%], Compatibilizer: Not contained, First conductive agent: acetylene black (low DBP carbon) 12 [wt. part], Second conductive agent: Not contained

### [Example 2]

Crystalline resin: polyphenylenesulfide (PPS) 90 [%], Amorphous resin: polyethersulfone (PES) 10 [%], Compatibilizer: Not contained, First conductive agent: acetylene black (low DBP carbon) 12 [wt. part], Second conductive agent: ZnO particles 3 [wt. part]

### [Example 3]

Crystalline resin: polyphenylenesulfide (PPS) 90 [%], Amorphous resin: polyethersulfone (PES) 10 [%], Compatibilizer: Not contained, First conductive agent: acetylene black (low DBP carbon) 12 [wt. part], Second conductive agent: Metal-oxide particles covered by Sb-doped SnO₂ 3 [wt. part]

### [Example 4]

Crystalline resin: polyphenylenesulfide (PPS) 90 [%], Amorphous resin: polycarbonate (PC) 10 [%], Compatibilizer: oxazoline group-containing polymer 0.1 [wt. part], First conductive agent: acetylene black (low DBP carbon) 12 [wt. part], Second conductive agent: ZnO particles 3 [wt. part]

### [Example 5]

Crystalline resin: polyphenylenesulfide (PPS) 95 [%], Amorphous resin: polycarbonate (PC) 5 [%], Compatibilizer: oxazoline group-containing polymer 0.1 [wt. part], First conductive agent: acetylene black (high DBP carbon) 6 [wt. part], Second conductive agent: Sb-doped SnO₂ particles 3 [wt. part]

### [Example 6]

Crystalline resin: polyphenylenesulfide (PPS) 90 [%], Amorphous resin: polyphenyleneether (PPE) 10 [%], Compatibilizer: ethylene-glycidyl methacrylate copolymer 0.5 [wt. part], First conductive agent: acetylene black (high DBP carbon) 6 [wt. part], Second conductive agent: Sb-doped SnO₂ particles 3 [wt. part]

### [Example 7]

Crystalline resin: polyphenylenesulfide (PPS) 90 [%], Amorphous resin: polyphenyleneether (PPE) 10 [%], Compatibilizer: ethylene-glycidyl methacrylate copolymer 0.5 [wt. part], First conductive agent: acetylene black (high DBP carbon) 6 [wt. part], Second conductive agent: SnO₂ particles 3

### [wt. part]

### [Example 8]

Crystalline resin: polyetheretherketone (PEEK) 70 [%], Amorphous resin: polyethersulfone (PES) 30 [%], Compatibilizer: ethylene-glycidyl methacrylate copolymer 2 [wt. part], First conductive agent: acetylene black (high DBP carbon) 6 [wt. part], Second conductive agent: ZnO particles 3 [wt. part]

### [Example 9]

Crystalline resin: polyetheretherketone (PEEK) 70 [%], Amorphous resin: polycarbonate (PC) 30 [%], Compatibilizer: oxazoline group-containing polymer 2 [wt. part], First conductive agent: acetylene black (high DBP carbon) 6 [wt. part], Second conductive agent: ZnO particles 3 [wt. part]

### [Example 10]

Crystalline resin: polyetheretherketone (PEEK) 70 [%], Amorphous resin: polysulfone (PSF) 30 [%], Compatibilizer: oxazoline group-containing polymer 2 [wt. part], First conductive agent: acetylene black (high DBP carbon) 6 [wt. part], Second conductive agent: ZnO particles 3 [wt. part]

### [Example 11]

Crystalline resin: polyetheretherketone (PEEK) 70 [%], Amorphous resin: polyarylate (PAR) 30 [%], Compatibilizer: oxazoline group-containing polymer 2 [wt. part], First conductive agent: acetylene black (high DBP carbon) 6 [wt. part], Second conductive agent: ZnO particles 3 [wt. part]

### [Example 12]

Crystalline resin: polyvinylidene difluoride (PVDF) 90 [%], Amorphous resin: polycarbonate (PC) 10 [%], Compatibilizer: Not contained, First conductive agent: acetylene black (high DBP carbon) 6 [wt. part], Second conductive agent: ZnO particles 4 [wt. part]

### [Comparative Example 1]

Crystalline resin: polyphenylenesulfide (PPS) 100 [%], Amorphous resin: Not contained, Compatibilizer: Not contained, First conductive agent: acetylene black (high DBP carbon) 8 [wt. part], Second conductive agent: ZnO particles 6 [wt. part]

### [Comparative Example 2]

Crystalline resin: polyetheretherketone (PEEK) 100 [%], Amorphous resin: Not contained, Compatibilizer: Not contained, First conductive agent: acetylene black (high DBP carbon) 8 [wt. part], Second conductive agent: ZnO particles 6 [wt. part]

### [Comparative Example 3]

Crystalline resin: polyvinylidene difluoride (PVDF) 100 [%], Amorphous resin: Not contained, Compatibilizer: Not contained, First conductive agent: acetylene black (high DBP carbon) 8 [wt. part], Second conductive agent: ZnO particles 6 [wt. part]

### [Comparative Example 4]

Crystalline resin: Not contained, Amorphous resin: polyethersulfone (PES) 100 [%], Compatibilizer: Not contained, First conductive agent: acetylene black (high DBP carbon) 8 [wt. part], Second conductive agent: ZnO particles 6 [wt. part]

### [Comparative Example 5]

Crystalline resin: Not contained, Amorphous resin: polycarbonate (PC) 100 [%], Compatibilizer: Not contained, First conductive agent: acetylene black (high DBP carbon) 8 [wt. part], Second conductive agent: ZnO particles 6 [wt. part]

### [Comparative Example 6]

Crystalline resin: Not contained, Amorphous resin: polyphenyleneether (PPE) 100 [%], Compatibilizer: Not contained, First conductive agent: acetylene black (high DBP carbon) 8 [wt. part], Second conductive agent: ZnO particles 6 [wt. part]

### [Comparative Example 7]

Crystalline resin: Not contained, Amorphous resin: polysulfone (PSF) 100 [%], Compatibilizer: Not contained, First conductive agent: acetylene black (high DBP carbon) 8 [wt. part], Second conductive agent: ZnO particles 6 [wt. part]

### [Comparative Example 8]

Crystalline resin: Not contained, Amorphous resin: polyarylate (PAR) 100 [%], Compatibilizer: Not contained, First conductive agent: acetylene black (High DBP carbon) 8 [wt. part], Second conductive agent: ZnO particles 6 [wt. part]

### [Comparative Example 9]

Crystalline resin: polyphenylenesulfide (PPS) 30 [%], Amorphous resin: polyethersulfone (PES) 70 [%], Compatibilizer: ethylene-glycidyl methacrylate copolymer 0.5 [wt. part], First conductive agent: acetylene black (high DBP carbon) 5.8 [wt. part], Second conductive agent: ZnO particles 3 [wt. part]

### [Comparative Example 10]

Crystalline resin: polyvinylidene difluoride (PVDF) 60 [%], Amorphous resin: polyethersulfone (PES) 40 [%], Compatibilizer: ethylene-glycidyl methacrylate copolymer 0.5 [wt. part], First conductive agent: acetylene black (high DBP carbon) 5.6 [wt. part], Second conductive agent: ZnO particles 3 [wt. part]

### [Comparative Example 11]

Crystalline resin: polyphenylenesulfide (PPS) 100 [%], Amorphous resin: Not contained, Compatibilizer: Not contained, First conductive agent: acetylene black (high DBP carbon) 6 [wt. part], Second conductive agent: Sb-doped SnO₂ particles 3 [wt. part]

### [Comparative Example 12]

Crystalline resin: polyvinylidene difluoride (PVDF) 90 [%], Amorphous resin: polysulfone (PSF) 10 [%], Compatibilizer: Not contained, First conductive agent: acetylene black (high DBP carbon) 5.6 [wt. part], Second conductive agent: ZnO particles 3 [wt. part]

### [Comparative Example 13]

Crystalline resin: polyphenylenesulfide (PPS) 90 [%], Amorphous resin: polyethersulfone (PES) 10 [%], Compatibilizer: Not contained, First conductive agent: acetylene black (high DBP carbon) 6 [wt. part], Second conductive agent: Not contained

### [Comparative Example 14]

Crystalline resin: polyphenylenesulfide (PPS) 60 [%], Amorphous resin: polycarbonate (PC) 10 [%], Compatibilizer: Not contained, First conductive agent: acetylene black (high DBP carbon) 5.6 [wt. part], Second conductive agent: ZnO particles 3 [wt. part]

### [Comparative Example 15]

Crystalline resin: polyphenylenesulfide (PPS) 50 [%], Amorphous resin: polyphenyleneether (PPE) 50 [%], Compatibilizer: ethylene-glycidyl methacrylate copolymer 1 [wt. part], First conductive agent: acetylene black (high DBP carbon) 5.5 [wt. part], Second conductive agent: ZnO particles 3 [wt. part]

### [Comparative Example 16]

Crystalline resin: polyvinylidene difluoride (PVDF) 90 [%], Amorphous resin: polyphenyleneether (PPE) 10 [%], Compatibilizer: Not contained, First conductive agent: acetylene black (high DBP carbon) 6 [wt. part], Second conductive agent: Sb-doped SnO₂ particles 3 [wt. part]

### [Comparative Example 17]

Crystalline resin: polyphenylenesulfide (PPS) 90 [%], Amorphous resin: polyarylate (PAR) 10 [%], Compatibilizer: Not contained, First conductive agent: Not contained, Second conductive agent: ZnO particles 20 [wt. part]

The above unit, "wt. part" for the compatibilizer, first conductive agent, and second conductive agent represents the weight part in relation to the total weight of crystalline resin and amorphous resin.

Table 1 shows the blending conditions and the evaluation result of each conductive-resin belt according to Examples and Comparative examples. In detail, materials of each blending component were pelletized through a biaxial-extrusion kneading machine (L/D = 60). A conductive-resin belt having an inner diameter 250 [mm] and width 235 [mm] was obtained by extrusion molding using a spiral dice 50 and/or mandrel 51 shown in FIG. 6. The obtained conductive-resin belt of each of Examples and Comparative examples was evaluated according to the following steps and standards.

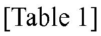

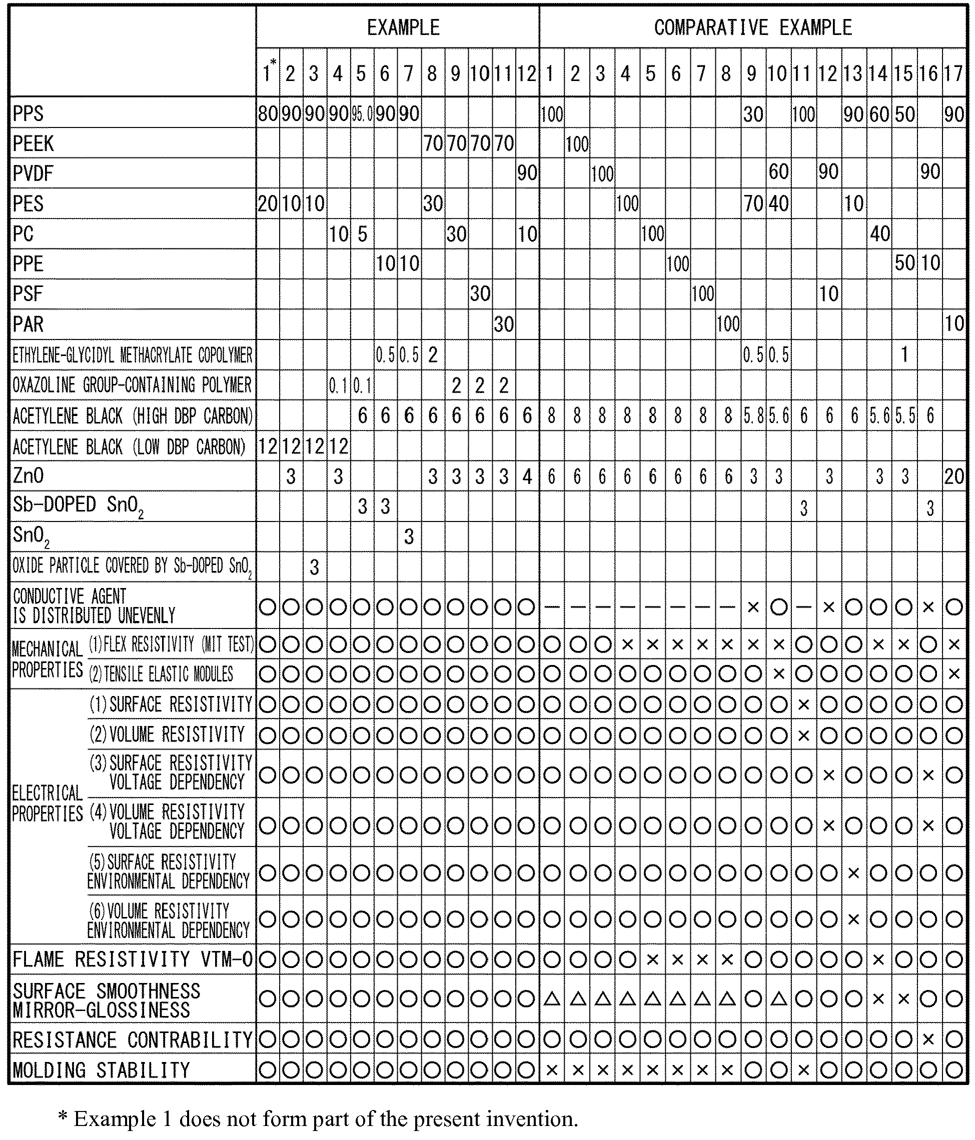

In the evaluation step, "○" is indicated when the measured value satisfies the following properties quantitatively, "×" is indicated when the measured value does not satisfy the properties quantitatively, and "Δ" is indicated each time when the measured value merely satisfies or merely does not satisfy the properties quantitatively. Herein, the range of "merely" is defined according to variations in the manufacturing step. When the "○" product and "×" product are presented in turn, "Δ" is indicated.
1. Mechanical properties Flex resistivity (MIT test): JIS-P8115, more than 500 times (film thickness 70±10 [µm]), Tensile elastic modulus: JIS-K7127 compliant, more than 1800 [MPa]
2. Electrical properties
   (1) Surface resistivity: 10⁶ to 10¹⁴ [ohms per square], preferably 10⁸ to 10¹² [ohms per square] (at arbitral voltage from 100 to 500 [V])
   (2) Volume resistivity: 10⁶ to 10¹⁴ [ohm-cm], preferably 10⁸ to 10¹² [ohm-cm] (at arbitral voltage from 100 to 500 [V])
   (3) Voltage dependency (Surface resistivity): within single digits (100 to 500 [V])
   (4) Voltage dependency (Volume resistivity): within double digits (100 to 250 [V])
   (5) Environmental dependency (Surface resistivity): within 0.5 digits (10°, 10 [%] RH to 30°, 90 [%] RH)
   (6) Environmental dependency (Voltage dependency): within single digits (10°, 10 [%] RH to 30°, 90 [%] RH)
3. Flame resistivity: VTM - 0 at thickness of 50 to 150 [µm] under the UR 94 standard
4. Surface smoothness: 70 or more at 20 degrees mirror-glossiness (use PG - 1, product of NIPPON DENSHOKU INDUSTRIES CO., LTD)
5. Resistance controllability: the reproducibility in the variation of the electric properties upon the change in manufacturing conditions is high; the variation ratio [log-ohm per degree] of the volume resistivity according to the change the molding temperature is less than 0.2.
6. Molding stability: it is possible to supply the raw resin stably and sustainably by the screw in the extruder; the resin-melt pressure does not fall below 2 [MPa] for more than 30 minutes in the moldability-testing machine.

In Table 1, the unit for the numeral values of "PPS" to "PAR" represents "%". The unit for the "ethylene-glycidyl methacrylate copolymer" to the "metal oxide particles covered by Sb-doped SnO₂" represents "weight part in relation to total weight from PPS to PAR".

As shown in Table 1, the conductive-resin belt according to Examples 1 to 12 can satisfy the resistance controllability and molding stability which are required upon extrusion molding at the same time as satisfying the mechanical properties, electrical properties, flame resistance, surface smoothness which are required for an intermediate transfer belt.

On the other hand, it is obvious that the conductive-resin belt according to Comparative examples 1 to 17 cannot satisfy at least one of the mechanical properties, electric properties, flame resistance, and surface smoothness which are required for an intermediate transfer belt, and the resistance controllability and molding stability which are required upon extrusion molding.

### [Embodiment 2]

Hereinafter, the descriptions are given below of an image-forming apparatus including the conductive-resin belt according to Embodiment 2 of the present invention.

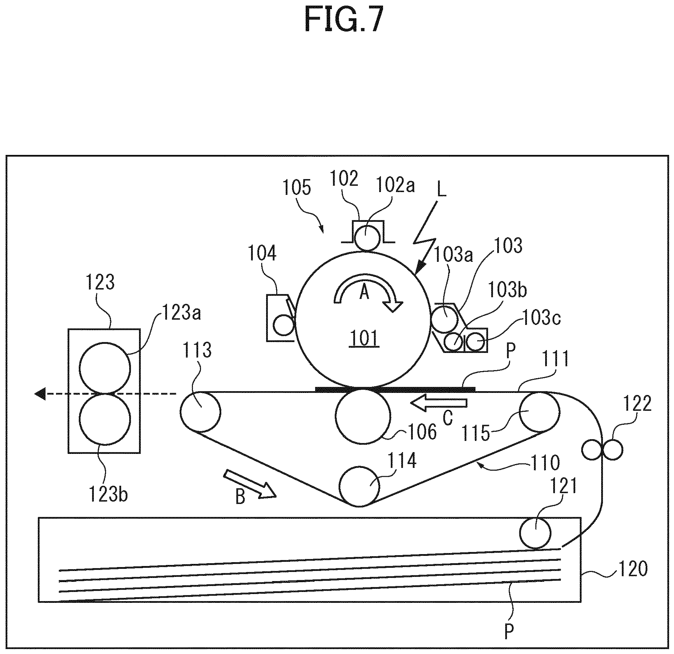

FIG. 7 schematically illustrates a configuration of the image-forming apparatus including the conductive-resin belt which is provided in the intermediate-transfer belt 61 in Embodiment 1 as a later-described transfer-carrying belt 111.

As shown in FIG. 7, the image-forming apparatus includes an image-forming unit 105 which includes a charging device 102, developing device 103, drum-cleaning device 104, and a not-shown neutralization apparatus around a photoreceptor 101 as an image carrier.

The image-forming unit 105 holds each apparatus on a common holder. Each apparatus can be detachable at the same time by integrally discharging the holder from a main body of the apparatus.

The photoreceptor 101 has a drum shape and includes an organic photosensitive layer on the surface of the drum-base substance. The photoreceptor 101 rotates in a direction indicated by an arrow A in the figure by a not-shown driving unit.

The charging device 102 includes a charging roller 102a provided so as to have contact with or to be adjacent to the photoreceptor 101. The charging device 102 charges the surface of the photoreceptor 101 uniformly by generating electric discharge in between the charging roller 102a and the photoreceptor 101. Charging bias is applied on the charging roller by a not-shown electrical source.

In the image-forming apparatus, the photoreceptor 101 is discharged uniformly to have negative polarity similar to the normal charged polarity of toner. As for the charging bias, direct-current voltage onto which alternative-current voltage is superimposed is applied. A charging unit which charges via a charger may be used as a substitute for the arrangement in which the charging member such as the charging roller 102a has contact with or is provided adjacent to the photoreceptor 101.

A not-shown optical writing apparatus of a latent image-writing apparatus is provided on the upper side of the image-forming unit 105. A latent image is formed through the optical writing apparatus in which optical scanning is performed on the surface of the uniformly-discharged photoreceptor 101 which is discharged by laser beam L emitted from laser diode according to image information.

The developing device 103 visualizes the toner image by adhering charged toner onto the latent image formed on the surface of the photoreceptor 101. The developing device 103 includes the developing portion including the developing roller 103a inside the casing, and a developer-transporting portion including inside transporting screws 103b, 103c which stir and transport developer. Developer is stirred and transported towards the developing roller 103a through which the transporting screws 103b and 103c rotate inside the developer-transporting portion.

In addition, a not-shown toner-density censor is provided on the lower wall of the casing, in which the toner density of developer inside the developer-transporting portion is detected. According to the detection result, toner is supplied in the developer-transporting portion of the developing device 103 by a not-shown toner-supply device.

The developing roller 103a included in the developing portion faces the transporting screw 103b at the same time as facing the photoreceptor 101 through the opening provided in the casing.

The developing roller 103a includes a cylindrical developing sleeve configured by a rotatable non-magnetic pipe, and a magnetic roller which is fixed so as not to rotate relative to the developing sleeve inside. Developer supplied from the transporting screw 103b is held on the surface of the developing sleeve by the magnetic power generated by the magnetic roller, and the developer is transported to the developing area facing the photoreceptor 101 by the rotation of developing sleeve.

A developing bias which has the same polarity as toner is applied onto the developing sleeve. The bias is bigger than the latent image on the photoreceptor 101 and smaller than the electric potential of the uniformed charge on the photoreceptor. Thereby, an electrical field in which toner on the developing sleeve is transported by static electricity toward the latent image is formed between the developing sleeve and the latent image on the photoreceptor 101. A toner image is developed by adhering toner on the latent image.

A transporting unit 110 including a transfer-carrying belt 111 is provided on the lower portion of the image-forming unit 105.

The transfer-carrying belt 111 is wound in a nearly triangular shape so that its running surface facing the photoreceptor 101 can move in the nearly horizontal direction by a transfer roller 106 and/or a plurality of supporting rollers 113, 114, 115 including a driving roller. The transfer-carrying belt 111 moves on the surface of the rollers in the direction of an arrow B. A transfer-nip portion is formed in the transfer unit 110 which sandwiches the transfer-carrying belt 111 in between the photoreceptor 101 and the transfer roller 106.

In addition, a paper-feeding cassette 120 which stores recording paper P in a bunch of paper is provided on the lower portion of the transfer unit 110.

In the paper-feeding cassette 120, a paper-feeding roller 121 contacts the upper surface sheet of the stack of the recording paper P. By rotating the paper-feeding roller 121 at the predetermined timing, the recording paper P is conveyed toward the paper-feeding path.

A pair of resist rollers 122 is provided around the end side of the paper-feeding path. The recording paper P in the paper-feeding cassette 120 is fed toward the predetermined transporting path by the paper-feeding roller 121 so as to be conformed to the timing of the image-formation performance, and the recording paper P stands by before the resist rollers 122.

The resist rollers 122 discharge the stacked recording paper P so as to be conformed to the timing in which the toner image on the photoreceptor 101 arrives at the transfer nip portion. The recording paper P which is discharged from the resist rollers 122 lands on the driving surface of the transfer-carrying belt 111 which is wound in a nearly horizontal direction, and is transported in the direction indicated with an arrow C in the figure.

The recording paper P transported on the transfer-carrying belt 111 is transported in a forward direction to the rotating direction of the photoreceptor 101 with a constant velocity or a nearly constant velocity in relation to the circumferential velocity of the photoreceptor 101, and further transported to the transfer-nip portion which is sandwiched between the transfer roller 106 and the photoreceptor 101.

In the transfer-nip portion, the recording paper P is contacted and pressed to the photoreceptor 101 with a predetermined pressure. A constant voltage having an opposite polarity in relation to the polarity of toner or a constant-current-controlled voltage is applied onto the recording paper P by the transfer roller 106 having a not-shown high-pressure power source. Thereby, the toner image formed on the surface of the photoreceptor 101 is transferred to the recording paper P through the transfer-nip portion.

The remaining untransferred toner on the surface of the photoreceptor 101 after the toner image is transferred onto the recording paper P is removed by the drum-cleaning device 104 and the surface of the photoreceptor 101 is cleaned up. Subsequently, the surface potential of the photoreceptor 101 is initialized by a not-shown discharging apparatus such as a discharging lamp.

The recording paper P on which the toner image is transferred is separated from the transfer-carrying belt 111 at the position of the supporting roller 113, and transported toward a fixing device 123. The fixing device 123 inserts the recording paper P in between a fixing-nip portion which is configured by contact between a fixing roller 123a including a heating power source such as a halogen lamp and a pressure roller 123b so that the toner image is fixed by the function of heating or pressure.

Thereafter, the recording paper P on which the toner image is fixed is discharged outside the apparatus. When another image is to be formed on the opposite side of the recording paper P, the recording paper P is transported to the transfer-nip portion again through a not-shown recording-paper flip apparatus and the image formation is performed again.

In Embodiment 2, the conductive-resin belt which is provided with the intermediate transfer belt 61 in Embodiment 1 is used as the transfer-carrying belt 111. Thereby, the conductive-resin belt can satisfy all of the required mechanical properties, electrical properties, flame resistivity, and surface smoothness as the transfer-carrying belt 111 at the same time as achieving the resistance controllability and the molding stability during the extrusion molding.

Each of the above-described Embodiments is merely an example of the present invention, and the present invention works well particularly per the following aspects.
<Aspect A>
   A belt assembly comprising an incompatible-polymer alloy including at least one crystalline resin which is selected from polyphenylene sulfide, polyetheretherketone, and polyvinylidene difluoride and at least one amorphous resin which is selected from polyethersulfone and polycarbonate, polyphenyleneether, polysulfone, and polyarylate, wherein the weight ratio between the crystalline resin and the amorphous resin is from 70:30 to 95:5, carbon as a first conductive agent is distributed unevenly only in a successive layer, and a second conductive agent which is selected from ZnO particles, SnO₂ particles, Sb-doped SnO₂ particles, In-doped SnO₂ particles, P-doped SnO₂ particles and metal-oxide particles covered by one of these particles is distributed unevenly only in the successive layer, and a flame-resistance value of the belt is VTM - 0 under a condition that a thickness thereof is from 50 [µm] to 150 [µm] at the UL 94 standard. Thereby, as described above, the mechanical properties, electrical properties, flame resistivity, and surface smoothness which are required as the transfer belt are satisfied at the same time as the resistance controllability and the molding stability which are required for the extrusion molding are satisfied.
<Aspect B>
   In the belt assembly according to Aspect A, polyphenylene sulfide is selected as the crystalline resin. Thereby, as described above, the cost reduction and longer operation can be achieved compared with the case in which polyetheretherketone (PEEK) or polyvinylidene difluoride (PVDF) is selected as the crystalline resin.
<Aspect C>
   In the belt assembly according to Aspect B, polycarbonate is selected as the amorphous resin. Thereby, as described above, the cost reduction can be achieved at most compared with that in the other combinations.
<Aspect D>
   In the belt assembly according to Aspect B, polyethersulfone is selected as the amorphous resin. Thereby, as described above, the mechanical properties can become largest compared with those of the other combinations.
<Aspect E>
   In the belt assembly according to Aspect B, polyphenyleneether is selected as the amorphous resin. Thereby, as described above, the belt assembly can be provided in which protruding defects due to foreign materials can be prevented at maximum compared with those of the other combinations.
<Aspect F>
   In the belt assembly according to Aspects A, B, C, D, or E, the polymer alloy is dispersed minutely by blending compatibilizer which is selected from ethylene-glycidyl methacrylate copolymer or oxazoline group-containing polymer. Thereby, as described above, solutions to the problems capable of being solved through the combination of polymer-alloy resin can be achieved more easily, and the process window for solving the problems can be expanded.
<Aspect G>
   In the belt assembly according to Aspect A, B, C, D, E, or F, the second conductive agent is ZnO particles. Thereby, as described above, the cost reduction can be achieved at maximum compared with that of the other oxide-metal system conductive agents.
<Aspect H>
   In the belt assembly according to Aspect A, B, C, D, E, F, or G, the second conductive agent is SnO₂ particles, Sb-doped SnO₂ particles, or metal-oxide particles covered by Sb-doped SnO₂. Thereby, as described above, the volume resistivity can be lowered appropriately and the required resistivity can be achieved.
<Aspect I>
   In the belt assembly according to Aspect A, B, C, D, E, F, G, or H, the volume resistivity is from 106 [ohm-cm] to 1014 [ohm-cm] under a measured-voltage 100 [V], and a surface resistivity is 106 [ohm per square] to 1014 [ohm per square] under a measured-voltage 500 [V]. Thereby, as described above, the belt assembly has a resistivity so that it can be equipped with the image-formation apparatus more easily.
<Aspect J>
   In the belt assembly according to Aspect A, B, C, D, E, F, G, H, or I, the volume resistivity is from 108 [ohm-cm] to 1012 [ohm-cm] under a measured voltage 100 [V], and the surface resistivity is from 108 [ohm-cm] to 1012 [ohm-cm] under a measured voltage 500 [V]. Thereby, as described above, the belt assembly has a resistivity so that it can be equipped with the image-formation apparatus more easily.
<Aspect K>
   An image-forming apparatus comprising an image carrier; a latent image-forming device which forms a latent image on the image carrier; a developing device which develops a toner image by applying toner onto the latent image formed on the image carrier; an intermediate transfer belt; a primary transfer device which transfers the toner image on the image carrier onto the intermediate transfer belt; a secondary transfer device which transfers the toner image on the intermediate transfer belt onto a recording media; and a fixing device which fixes the toner image on the recording media, wherein the belt assembly according to Aspect A, B, C, D, E, F, G, H, I, or J is used as the intermediate transfer belt. Thereby, the rupture of the belt during belt running can be prevented, image defects such as white spots can be prevented, the control of the properties can be performed easily so that the reproducibility can be maintained, the cost reduction can be achieved, and the high-level requirements for safety can be satisfied because of the flame resistivity for performing good image formation.
<Aspect L>
   An image-forming apparatus comprising an image carrier; a latent image-forming device which forms a latent image on the image carrier; a developing device which develops a toner image by applying toner onto the latent image formed on the image carrier; a transfer-carrying belt which transports recording media on which the toner image on the image carrier is transferred; a transfer device which transfers the toner image on the image carrier onto the recording media; and a fixing device which fixes the toner image on the recording media, wherein the belt assembly according to any one of Aspects A to J is used as the transfer-carrying belt. Thereby, the rupture of the belt during belt running can be prevented, image defects such as white spots can be prevented, the control of the properties can be performed easily so that the reproducibility can be maintained, the cost reduction can be achieved, and the high-level requirements for safety can be satisfied because of the flame resistivity for performing good image formation.
<Aspect M>
   A method for manufacturing a belt assembly which is configured by polymer alloy of crystalline resin and amorphous resin comprising a melting and kneading step which obtains a melt-kneaded product by melting and kneading at least one crystalline resin which is selected from polyphenylene sulfide, polyetheretherketone, and polyvinylidene difluoride; at least one amorphous resin which is selected from polyethersulfone, polycarbonate, polyphenyleneether, polysulfone, and polyarylate; carbon as a first conductive agent; and at least one second conductive agent which is selected from ZnO particles, SnO₂ particles, Sb-doped SnO₂ particles, In-doped SnO₂ particles, P-doped SnO₂ particles and metal-oxide particles covered by one of these particles; and a molding step which obtains a molded product by performing extrusion molding on the melt-kneaded product. Thereby, as described above, the belt member in which the mechanical properties, electrical properties, flame resistivity, and surface smoothness which are required for the transfer belt are satisfied at the same time as the resistance controllability and the molding stability which are required for the extrusion molding are satisfied can be obtained.
<Aspect N>
   In the method for manufacturing the belt assembly according to Aspect M, a mandrel is provided on a lower portion of a dice which is used in the molding step, the method including a step of cooling the melt-kneaded product by the mandrel to be a glass-transition temperature of the melt-kneaded product or below. Thereby, as described above, the perimeter (size) of the molded product obtained by the extrusion molding can be controlled stably. In addition, it includes significant effects in relation to the manufacturing control such that the influence of air can be reduced, the influence of fluctuation can be reduced, and the preparation before manufacture can be simple.

As described above, according to Embodiments of the present invention, the transfer belt includes beneficial effects such that the mechanical properties, electrical properties, flame resistance, and surface smoothness required for a transfer belt are satisfied at the same time as resistance controllability and the molding stability are achieved during extrusion molding.

## Claims

1. A belt assembly, comprising:
an incompatible-polymer alloy including:
at least one crystalline resin which is selected from polyphenylene sulfide, polyetheretherketone, and polyvinylidene difluoride; and
at least one amorphous resin which is selected from polyethersulfone and polycarbonate, polyphenyleneether, polysulfone, and polyarylate;
a first conductive agent; and
a second conductive agent; wherein
the weight ratio between the crystalline resin and the amorphous resin is from 70:30 to 95:5,
the first conductive agent is carbon and is distributed unevenly only in the crystalline resin,
the second conductive agent is selected from: particles of ZnO, SnO₂, Sb-doped SnO₂, In-doped SnO₂, or P-doped SnO₂; and metal-oxide particles covered by one of ZnO, SnO₂, Sb-doped SnO₂, In-doped SnO₂, or P-doped SnO₂;
the second conductive agent is distributed unevenly only in the crystalline resin, and
a flame-resistance value of the belt is VTM - 0 under a condition that a thickness thereof is from 50 [µm] to 150 [µm] at the UL 94 standard.

2. The belt assembly according to Claim 1, wherein polyphenylene sulfide is selected as the crystalline resin.

3. The belt assembly according to Claim 2, wherein polycarbonate is selected as the amorphous resin.

4. The belt assembly according to Claim 2, wherein polyethersulfone is selected as the amorphous resin.

5. The belt assembly according to Claim 2, wherein polyphenyleneether is selected as the amorphous resin.

6. The belt assembly according to any one of Claims 1 to 5, wherein the polymer alloy is dispersed minutely by blending compatibilizer which is selected from ethylene-glycidyl methacrylate copolymer or oxazoline group-containing polymer.

7. The belt assembly according to any one of Claims 1 to 6, wherein the second conductive agent is ZnO particles.

8. The belt assembly according to any one of Claims 1 to 6, wherein the second conductive agent is SnO₂ particles, Sb-doped SnO₂ particles, or metal-oxide particles covered by Sb-doped SnO₂.

9. The belt assembly according to any one of Claims 1 to 8, wherein
a volume resistivity is from 10⁶ [ohm-cm] to 10¹⁴ [ohm-cm] under a measured-voltage 100 [V], and
a surface resistivity is 10⁶ [ohm per square] to 10¹⁴ [ohm per square] under a measured-voltage 500 [V].

10. The belt assembly according to any one of Claims 1 to 8, wherein
the volume resistivity is from 10⁸ [ohm-cm] to 10¹² [ohm-cm] under a measured voltage 100 [V], and
the surface resistivity is from 10⁸ [ohm per square] to 10¹² [ohm per square] under a measured voltage 500 [V].

11. An image-forming apparatus (1), comprising:
an image carrier (11);
a latent image-forming device which forms a latent image on the image carrier (11);
a developing device (30) which develops a toner image by applying toner onto the latent image formed on the image carrier (11);
an intermediate transfer belt (61);
a primary transfer device (62) which transfers the toner image on the image carrier (101) onto the intermediate transfer belt (61);
a secondary transfer device (63) which transfers the toner image on the intermediate transfer belt (61) onto a recording media; and
a fixing device (70) which fixes the toner image on the recording media, wherein
the belt assembly according to any one of Claims 1 to 10 is used as the intermediate transfer belt (61).

12. An image-forming apparatus, comprising:
an image carrier (101);
a latent image-forming device which forms a latent image on the image carrier;
a developing device (103) which develops a toner image by applying toner onto the latent image formed on the image carrier (101);
a transfer-carrying belt (111) which transports recording media on which the toner image on the image carrier (101) is transferred;
a transfer device which transfers the toner image on the image carrier (101) onto the recording media; and
a fixing device (123) which fixes the toner image on the recording media, wherein
the belt assembly according to any one of Claims 1 to 10 is used as the transfer-carrying belt (111).

13. A method for manufacturing a belt assembly which comprises a polymer alloy of crystalline resin and amorphous resin, comprising:
a melting and kneading step which obtains a melt-kneaded product by melting and kneading at least one crystalline resin which is selected from polyphenylene sulfide, polyetheretherketone, and polyvinylidene difluoride; at least one amorphous resin which is selected from polyethersulfone, polycarbonate, polyphenyleneether, polysulfone, and polyarylate; carbon as a first conductive agent; and at least one second conductive agent which is selected from ZnO particles, SnO₂ particles, Sb-doped SnO₂ particles, In-doped SnO₂ particles, P-doped SnO₂ particles and metal-oxide covered by one of these particles; and
a molding step which obtains a molded product by performing extrusion molding on the melt-kneaded product.

14. The method for manufacturing the belt assembly according to Claim 13, wherein
a mandrel (51) is provided on a lower portion of a dice (50) which is used in the molding step,
the method including a step of cooling the melt-kneaded product by the mandrel (51) to be a glass-transition temperature of the melt-kneaded product or below.

## Patentansprüche

1. Bandanordnung, umfassend:
eine inkompatible Polymerlegierung, die Folgendes beinhaltet:
mindestens ein kristallines Harz, das ausgewählt ist aus Polyphenylensulfid, Polyetheretherketon und Polyvinylidendifluorid; und
mindestens ein amorphes Harz, das ausgewählt ist aus Polyethersulfon und Polycarbonat, Polyphenylenether, Polysulfon und Polyarylat;
ein erstes leitfähiges Mittel; und
ein zweites leitfähiges Mittel; wobei
das Gewichtsverhältnis zwischen dem kristallinen Harz und dem amorphen Harz von 70:30 bis 95:5 ist,
das erste leitfähige Mittel Kohlenstoff ist und nur in dem kristallinen Harz ungleichmäßig verteilt ist,
das zweite leitfähige Mittel ausgewählt ist aus: Teilchen von ZnO, SO₂, Sb-dotiertem SnO₂, In-dotiertem SnO₂ oder P-dotiertem SnO₂; und Metalloxidteilchen, die von einem aus ZnO, SnO₂, Sb-dotiertem SnO₂, In-dotiertem SnO₂ oder P-dotiertem SnO₂ bedeckt sind;
das zweite leitfähige Mittel nur in dem kristallinen Harz ungleichmäßig verteilt ist und
ein Flammbeständigkeitswert des Bands VTM-0 unter einer Bedingung ist, dass eine Dicke davon von 50 [µm] bis 150 [µm] bei der Norm UL 94 ist.

2. Bandanordnung nach Anspruch 1, wobei Polyphenylensulfid als das kristalline Harz ausgewählt ist.

3. Bandanordnung nach Anspruch 2, wobei Polycarbonat als das amorphe Harz ausgewählt ist.

4. Bandanordnung nach Anspruch 2, wobei Polyethersulfon als das amorphe Harz ausgewählt ist.

5. Bandanordnung nach Anspruch 2, wobei Polyphenylenether als das amorphe Harz ausgewählt ist.

6. Bandanordnung nach einem der Ansprüche 1 bis 5, wobei die Polymerlegierung durch Vermischen von Kompatibilisierungsmittel, das ausgewählt ist aus Ethylen-Glycidylmethacrylat-Copolymer oder eine Oxazolingruppe enthaltendem Polymer, minutiös dispergiert wird.

7. Bandanordnung nach einem der Ansprüche 1 bis 6, wobei das zweite leitfähige Mittel ZnO-Teilchen ist.

8. Bandanordnung nach einem der Ansprüche 1 bis 6, wobei das zweite leitfähige Mittel SnO₂-Teilchen, Sb-dotierte SnO₂-Teilchen oder Metalloxidteilchen ist, die von Sb-dotiertem SnO₂ bedeckt sind.

9. Bandanordnung nach einem der Ansprüche 1 bis 8, wobei
ein spezifischer Volumenwiderstand von 10⁶ [Ohm-cm] bis 10¹⁴ [Ohm-cm] unter einer gemessenen Spannung 100 [V] ist und
ein spezifischer Oberflächenwiderstand 10⁶ [Ohm pro Quadrat] bis 10¹⁴ [Ohm pro Quadrat] unter einer gemessenen Spannung 500 [V] ist.

10. Bandanordnung nach einem der Ansprüche 1 bis 8, wobei
der spezifische Volumenwiderstand von 10⁸ [Ohm-cm] bis 10¹² [Ohm-cm] unter einer gemessenen Spannung 100 [V] ist und
der spezifische Oberflächenwiderstand von 10⁸ [Ohm pro Quadrat] bis 10¹² [Ohm pro Quadrat] unter einer gemessenen Spannung 500 [V] ist.

11. Bilderzeugungsvorrichtung (1), umfassend:
einen Bildträger (11);
eine latente Bilderzeugungsvorrichtung, die ein latentes Bild auf dem Bildträger (11) erzeugt;
eine Entwicklungsvorrichtung (30), die ein Tonerbild durch Aufbringen von Toner auf das auf dem Bildträger (11) erzeugte latente Bild entwickelt;
ein Zwischenübertragungsband (61);
eine primäre Übertragungsvorrichtung (62), die das Tonerbild auf dem Bildträger (101) auf das Zwischenübertragungsband (61) überträgt;
eine sekundäre Übertragungsvorrichtung (63), die das Tonerbild auf dem Zwischenübertragungsband (61) auf ein Aufzeichnungsmedium überträgt; und
eine Fixiervorrichtung (70), die das Tonerbild auf den Aufzeichnungsmedien fixiert, wobei
die Bandanordnung nach einem der Ansprüche 1 bis 10 als das Zwischenübertragungsband (61) verwendet wird.

12. Bilderzeugungsvorrichtung, umfassend:
einen Bildträger (101);
eine latente Bilderzeugungsvorrichtung, die ein latentes Bild auf dem Bildträger erzeugt;
eine Entwicklungsvorrichtung (103), die ein Tonerbild durch Aufbringen von Toner auf das auf dem Bildträger (101) erzeugte latente Bild entwickelt;
ein Übertragungstransportband (111), das Aufzeichnungsmedien befördert, auf die das Tonerbild auf dem Bildträger (101) übertragen wird;
eine Übertragungsvorrichtung, die das Tonerbild auf dem Bildträger (101) auf die Aufzeichnungsmedien überträgt; und
eine Fixiervorrichtung (123), die das Tonerbild auf den Aufzeichnungsmedien fixiert, wobei die Bandanordnung nach einem der Ansprüche 1 bis 10 als das Übertragungstransportband (111) verwendet wird.

13. Verfahren zum Herstellen einer Bandanordnung, die eine Polymerlegierung aus kristallinem Harz und amorphem Harz umfasst, umfassend:
einen Schmelz- und Knetschritt, der durch Schmelzen und Kneten von mindestens einem kristallinen Harz, das ausgewählt ist aus Polyphenylensulfid, Polyetheretherketon und Polyvinylidendifluorid, mindestens einem amorphen Harz, das ausgewählt ist aus Polyethersulfon, Polycarbonat, Polyphenylenether, Polysulfon und Polyarylat, Kohlenstoff als ein erstes leitfähiges Mittel und mindestens einem zweiten leitfähigen Mittel, das ausgewählt ist aus ZnO-Teilchen, SnO₂-Teilchen, Sb-dotierten SnO₂-Teilchen, In-dotierten SnO₂-Teilchen, P-dotierten SnO₂-Teilchen und Metalloxid, das von einem dieser Teilchen bedeckt ist, ein schmelzgeknetetes Produkt erhält; und
einen Formungsschritt, der durch Ausführen von Strangpressen an dem schmelzgekneteten Produkt ein Formprodukt erhält.

14. Verfahren zum Herstellen der Bandanordnung nach Anspruch 13, wobei
ein Dorn (51) an einem unteren Abschnitt eines Würfels (50) bereitgestellt ist, der in dem Formungsschritt verwendet wird,
wobei das Verfahren einen Schritt des Abkühlens des schmelzgekneteten Produkts durch den Dorn (51) beinhaltet, um eine Glasübergangstemperatur des schmelzgekneteten Produkts oder niedriger zu erhalten.

## Revendications

1. Ensemble de courroie, comprenant :
un alliage de polymères incompatibles comprenant :
au moins une résine cristalline qui est choisie parmi le sulfure de polyphénylène, le polyétheréthercétone et le diflurure de polyvinylidène ; et
au moins une résine amorphe qui est choisie parmi le polyéthersulfone et le polycarbonate, le polyphénylèneéther, le polysulfone et le polyarylate ;
un premier agent conducteur ; et
un deuxième agent conducteur ;
le rapport pondéral entre la résine cristalline et la résine amorphe allant de 70/30 à 95/5,
le premier agent conducteur étant le carbone et étant réparti inégalement seulement dans la résine cristalline,
le deuxième agent conducteur étant choisi parmi : des particules de ZnO, SnO₂, SnO₂ dopé au Sb, SnO₂ dopé au In ou SnO₂ dopé au P ; et des particules d'oxyde métallique recouvertes de ZnO, SnO₂, SnO₂ dopé au Sb, SnO₂ dopé au In or SnO₂ dopé au P ;
le deuxième agent conducteur étant réparti inégalement seulement dans la résine cristalline, et
une valeur de résistance au feu de la courroie étant de VTM - 0 dans un état où une épaisseur de celle-ci va de 50 [µm] à 150 [µm] selon la norme UL-94.

2. Ensemble de courroie selon la revendication 1, dans lequel le sulfure de polyphénylène est choisi comme résine cristalline.

3. Ensemble de courroie selon la revendication 2, dans lequel le polycarbonate est choisi comme résine amorphe.

4. Ensemble de courroie selon la revendication 2, dans lequel le polyéthersulfone est choisi comme résine amorphe.

5. Ensemble de courroie selon la revendication 2, dans lequel le polyphénylèneéther est choisi comme résine amorphe.

6. Ensemble de courroie selon l'une quelconque des revendications 1 à 5, dans lequel l'alliage de polymère est légèrement dispersé par le mélange d'un agent de compatibilité qui est choisi parmi un copolymère d'éthylène-méthacrylate glycidylique ou un polymère contenant un groupe d'oxazoline.

7. Ensemble de courroie selon l'une quelconque des revendications 1 à 6, dans lequel le deuxième agent conducteur représente des particules de ZnO.

8. Ensemble de courroie selon l'une quelconque des revendications 1 à 6, dans lequel le deuxième agent conducteur représente des particules de SnO₂, des particules SnO₂ dopé au Sb, ou des particules d'oxyde métallique recouvertes d'un SnO₂ dopé au Sb.

9. Ensemble de courroie selon l'une quelconque des revendications 1 à 8, dans lequel
une résistivité volumique va de 10⁶ [ohm-cm] à 10¹⁴ [ohm-cm] avec une tension mesurée de 100 [V], et
une résistivité surfacique va de 10⁶ [ohm par carré] à 10¹⁴ [ohm par carré] avec une tension mesurée de 500 [V].

10. Ensemble de courroie selon l'une quelconque des revendications 1 à 8, dans lequel
la résistivité volumique va de 10⁸ [ohm-cm] à 10¹² [ohm-cm] avec une tension mesurée de 100 [V], et
la résistivité surfacique va de 10⁸ [ohm par carré] à 10¹² [ohm par carré] avec une tension mesurée de 500 [V].

11. Appareil de formation d'image (1), comprenant :
un support d'image (11) ;
un dispositif de formation d'image latente qui forme une image latente sur le support d'image (11) ;
un dispositif de développement (30) qui développe une image de toner par l'application de toner sur l'image latente formée sur le support d'image (11) ;
une courroie de transfert intermédiaire (61) ;
un dispositif de transfert primaire (62) qui transfère l'image de toner sur le support d'image (101) vers la courroie de transfert intermédiaire (61) ;
un dispositif de transfert secondaire (63) qui transfère l'image de toner sur la courroie de transfert intermédiaire (61) vers un support d'enregistrement ; et
un dispositif de fixation (70) qui fixe l'image de toner sur le support d'enregistrement,
l'ensemble de courroie selon l'une quelconque des revendications 1 à 10 étant utilisé comme courroie de transfert intermédiaire (61).

12. Appareil de formation d'image, comprenant :
un support d'image (101) ;
un dispositif de formation d'image latente qui forme une image latente sur le support d'image ;
un dispositif de développement (103) qui développe une image de toner par l'application de toner sur l'image latente formée sur le support d'image (101) ;
une courroie de support de transfert (111) qui transporte un support d'enregistrement sur lequel l'image de toner sur le support d'image (101) est transférée ;
un dispositif de transfert qui transfère l'image de toner sur le support d'image (101) vers le support d'enregistrement ; et
un dispositif de fixation (123) qui fixe l'image de toner sur le support d'enregistrement,
l'ensemble de courroie selon l'une quelconque des revendications 1 à 10 étant utilisé comme courroie de support de transfert (111).

13. Procédé de fabrication d'un ensemble de courroie qui comprend un alliage de polymères de résine cristalline et de résine amorphe, comprenant :
une étape de fusion et de malaxage qui permet d'obtenir un produit malaxé à l'état fondu par fusion et malaxage d'au moins une résine cristalline qui est choisie parmi le sulfure de polyphénylène, le polyétheréthercétone et le diflurure de polyvinylidène ; au moins une résine amorphe qui est choisie parmi le polyéthersulfone, le polycarbonate, le polyphénylèneéther, le polysulfone et le polyarylate ; le carbone en tant que premier agent conducteur ; et au moins un deuxième agent conducteur qui est choisi parmi des particules de ZnO, des particules de SnO₂, des particules de SnO₂ dopé au Sb, des particules de SnO₂ dopé au In, des particules de SnO₂ dopé au P et un oxyde métallique recouvert d'une de ces particules ; et
une étape de fusion qui permet d'obtenir un produit fondu par la mise en oeuvre d'un moulage par extrusion sur le produit malaxé à l'état fondu.

14. Procédé de fabrication de l'ensemble de courroie selon la revendication 13, dans lequel
un mandrin (51) est disposé sur une partie inférieure d'un dé (50) qui est utilisé dans l'étape de moulage,
le procédé comprenant une étape de refroidissement du produit malaxé à l'état fondu par le mandrin (51) pour obtenir une température de transition vitreuse du produit malaxé à l'état fondu ou inférieure.
